# EUROPEAN PATENT APPLICATION

(11) **EP 1 764 701 A1**
(43) Date of publication of application: **21.03.2007**
(21) Application number: 04746913.5
(22) Date of filing: 02.07.2004
(51) Int. Cl.: G06F 13/00, H04L 12/56, H04L 12/18, H04M 3/56, H04M 3/00, H04B 7/26, H04M 11/00

(54) **COMMUNICATION CONTROL METHOD AND COMPUTER SYSTEM**

(71) Applicant: Fujitsu Ltd., Kawasaki-shi, Kanagawa 211-8588 (JP)
(72) Inventor: MORISHIMA, Hisayuki, FUJITSU LIMITED, Kawasaki-shi, Kanagawa 2118588 (JP); SUZUKI, Takako, FUJITSU LIMITED, Kawasaki-shi, Kanagawa 2118588 (JP); YAMAZAKI, Kinya, FUJITSU LIMITED, Kawasaki-shi, Kanagawa 2118588 (JP); YAMAMOTO, Yuuki, FUJITSU LIMITED, Kawasaki-shi, Kanagawa 2118588 (JP); OHNO, Takashi, FUJITSU LIMITED, Kawasaki-shi, Kanagawa 2118588 (JP); OKUYAMA, Satoshi, FUJITSU LIMITED, Kawasaki-shi, Kanagawa 2118588 (JP); HORIO, Kenichi, FUJITSU LIMITED, Kawasaki-shi, Kanagawa 2118588 (JP); KAKUTA, Jun, FUJITSU LIMITED, Kawasaki-shi, Kanagawa 2118588 (JP); WATANABE, Ryosuke, FUJITSU LIMITED, Kawasaki-shi, Kanagawa 2118588 (JP); MOTOYAMA, Hideyuki, FUJITSU LIMITED, Kawasaki-shi, Kanagawa 2118588 (JP)
(74) Representative: Sunderland, James Harry
(86) International application number: PCT/JP2004/009444
(87) International publication number: WO 2006/003709

(57) **Abstract**

A communication control method of this invention includes : when a call-in request to a chat for another participant in a voice-based teleconference by a first participant of the voice-based teleconference is received, a step of transmitting the call-in request to the chat to a terminal of another participant; and when a participation response to the chat by another participant is received, a step of carrying out a presence management setting so as to enable the first participant and a participant replying the participation response to update and subscribe dialogue contents of the chat, which are managed as presence data delivered to subscribers when updated. Thus, by using the presence technique, it becomes possible that the conference is shifted from the voice-based teleconference to the character-based teleconference and both of the conferences coexist.

## Description

### [Technical Field]

This invention relates to a communication control technique in a teleconference.

### [Background Technology]

For example, JP-A-2003-298751 discloses a technique to realize a group call among three or more persons in an existing telephone system without a large technical change of a switch and/or a repeater, which are composed of the telephone system. That is, the technique includes a step of registering a caller information including a user ID, a telephone number and a password of the caller, and telephone numbers of a plurality of calling destination receivers for which the caller desires to call into a telephone directory database connected to a communication network in advance; a step of selecting the calling destination receiver of the caller, which is registered in the telephone directory database; a step of transmitting, by the telephone directory database, the telephone number of the caller and the telephone number of the calling destination receiver selected by the caller to a call center having simultaneous line connection means; and a step of simultaneously calling, by the call center, to the telephone number of the caller and the telephone number of the calling destination receiver selected by the caller through the simultaneous line connection means, and it is possible for the caller to simultaneously call with the plurality of selected calling destination receivers. However, an idea to change a communication mode of the conference on the way is not disclosed.

In addition, USP 5,809,018 discloses a group communication technique in a wireless system having plural base stations and subscriber stations. That is, in order to enable the subscriber station to select a group call it will participate among plural group calls while participating in a first group call, group call data is transmitted to the subscriber station in the first group call, and by using this data, the subscriber station can participate in another group call in progress. Thus, the subscriber station continues the participation in the first group call or if desired, another group call is selected from among group calls whose group call data is transmitted to the subscriber station and whose group call identifiers are simultaneously displayed on a display of the subscriber station. However, the idea to change the communication mode of the conference on the way is not disclosed. In addition, there is no disclosure for an item that one participant simultaneously participates in plural conferences.

Patent Document 1:JP-A-2003-298751
Patent Document 2: USP 5,809,018

### [Summary of the Invention]

### [Problem to be solved by this Invention]

By the recent development of the information and communication technique, the participation into the teleconference using the cellular phone has become possible. In the teleconference using the cellular phone, own argument is conveyed to other participants via voice. However, there are a lot of places in which the talking itself is considered as a problem. When moving to such a place, it is possible to hear without talking by using the cellular phone. However, the conference may not progress in that case. In addition, there is also a beneficial case where only some persons among the conference participants separately make arrangements. The conventional arts do not indicate any solution for such a problem.

Therefore, an object of this invention is to provide a communication control technique to change the communication mode in the teleconference from a voice base to a character base on the way.

In addition, another object of this invention is to provide a communication technique to enable to hold the character-based teleconference in the voice-based teleconference.

### [Means for solving the Problem]

A communication control method according to a first aspect of this invention includes: when a call-in request to a chat for another participant in a voice-based teleconference by a first participant of the voice-based teleconference is received, a step of transmitting the call-in request to the chat to a terminal of another participant; and when a participation response to the chat by another participant is received, a step of carrying out a presence management setting so as to enable the first participant and a participant replying the participation response to update and subscribe dialogue contents of the chat, which are managed as presence data delivered to subscribers when updated.

Thus, by using the presence technique, it becomes possible that the conference is shifted from the voice-based teleconference to the character-based teleconference and both of the conferences coexist.

In addition, the first aspect of this invention may further include: when the participation response to the chat by another participant is received, a step of carrying out a presence management setting so as to enable the first participant and the participant replying the participation response to at least subscribe a participant list of the chat, which is managed as presence data. It becomes possible for the chat participants to grasp other participants.

Furthermore, the first aspect of this invention may further include: in response to an update instruction of the presence data, a step of transmitting presence data to a terminal of the chat participant according to the presence management setting. According to the presence technique, the presence data is delivered to the subscribers when updated. Therefore, for example, because it is considered that there is an update when any chat participant writes, it is delivered as the presence data to terminals of other chat participants.

Incidentally, the aforementioned presence data may be managed as presence data for the voice-based teleconference. By inheriting the resources in the voice-based teleconference, it becomes possible to efficiently start the chat.

In addition, the first aspect of this invention may further include: when the call-in request to the chat by the first participant of the voice-based teleconference includes data representing an end of the voice-based teleconference, a step of deleting at least the first participant and the participant replying the participation response from the participant list of the voice-based teleconference. Thus, it becomes possible to shift from the voice-based teleconference to the character-based chat. Incidentally, other participants not accepting the participation to the chat may stay in the voice-based teleconference.

In addition, the first aspect of this invention may further include: a step of transmitting a request for stopping a routing of voice data for the participants deleted from the participant list of the voice-based teleconference to a computer carrying out a voice communication processing for the participants of the voice-based teleconference. By stopping the routing of the voice data, the voice data is not uselessly delivered.

In addition, aforementioned another participant may be a subset of the participants of the voice-based teleconference, wherein the subset is designated by the first participant of the voice-based teleconference. That is, not all participants may shift from the voice-based teleconference to the chat.

Furthermore, a plurality of sets of the presence data including the dialogue contents of the chat and the participant list of the chat may be managed for one voice-based teleconference.

In addition, the first aspect of this invention may further include: when the dialogue contents of the chat managed by the presence data is stored in a predetermined storage, and a reference request from the participant is received, a step of reading out the stored dialogue contents from the predetermined storage, and transmitting the dialogue contents to the participant terminal. For example, this is because there is a case where the user who participated later requires referring to the previous arguments.

Furthermore, the first aspect of this invention may further include: when the call-in request to the chat for other participants by the first participant of the voice-based teleconference is received, a step of judging, based on information concerning a state of the first participant, whether or not the participation request to the chat is transmitted to each terminal of aforementioned other participants. For example, when only a specific participant (e.g. a teacher) can transmit the call-in request to the chat, it is possible to judge, by holding the state where the first participant is a "teacher" in a state manager of the first participant, for example, whether or not the call-in is valid, and it is also possible to judge, by holding a state where the first participant is a "teacher", for example, by registering a user ID of the first participant into a state manager of the "teacher" in the voice-based teleconference, whether or not the call-in is valid. Furthermore, by referring to the information concerning the states of other participants, it becomes possible to carry out various control of the transmission of the chat call-in request.

A communication control method according to a second aspect of this invention includes: when a call-in request to a chat for another participant in a voice-based teleconference by a first participant of the voice-based teleconference is received through a presence server managing presence data, a step of requesting the presence server to transmit a participation request to the chat to a terminal of the aforementioned another participant; when a participation response to the chat by the aforementioned another participant is received through the presence server, a step of causing the presence server to carry out a presence management setting so as to enabling the first participant and the participant replaying the participation response to update and subscribe dialogue contents of the chat managed as the presence data delivered to the subscriber when updated.

For example, when the implementation is made so as to separate the system into a presence server and a conference management server, the aforementioned steps are executed by the conference management server. Thus, it becomes possible to additionally or separately realize the character-based teleconference by using the presence server.

In addition, the second aspect of this invention may further include: when the participation response to the chat by the aforementioned another participant is received through the presence server, a step of causing the presence server to carry out a presence management setting so as to enabling the first participant and the participant replying the participation response to at least subscribe a participant list of the chat managed as the presence data. It becomes possible for the user to refer to a participation state to the chat by using the participant list.

Furthermore, the second aspect of this invention may further include: when the call-in request to the chat by the first participant in the voice-based teleconference includes data representing the end of the voice-based teleconference, a step of causing the presence server to delete at least the first participant and the participant replying the participation response from the participant list of the voice-based teleconference managed as the presence data.

Furthermore, the second aspect of this invention may further include: a step of transmitting a request for stopping a routing of the voice data to the participants deleted from the participant list of the voice-based teleconference, to a computer carrying out a voice communication processing for the participants of the voice-based teleconference.

A computer system according to a third aspect of this invention has a presence server having routing means for carrying out transfer of a message to control a conference, and presence management means for carrying out a processing associated with presence data; a conference management server that carries out a conference control processing. Then, when a call-in request to a chat for another participant of the voice-based teleconference is received from a terminal of a first participant of the voice-based teleconference, the routing means of the presence server transfers the call-in request to the conference management server. Then, when the call-in request to the chat is received, the conference management server transmits a participation request to the chat for the aforementioned another participant to the presence server. In addition, when a participation request to the chat for the aforementioned another participant is received from the conference management server, the routing means of the presence server transmits the participation request to the chat to a terminal of the aforementioned another participant, and when a participation response to the chat is received from the terminal of the aforementioned another participant, the routing means of the presence server transfers the participant response to the conference management server. Then, when the participation response to the chat by the aforementioned another participant is received, the conference management server transmits a presence setting request so as to enable the first participant and a participant replying the participation response to update and subscribe dialogue contents of the chat. In response to the presence setting request, the presence management means of the presence server carries out a setting so as to enable the first participant and the participant replying the participation response to update and subscribe the dialogue contents of the chat as the presence data delivered to the subscribers when updated.

Furthermore, when the participation response to the chat by the aforementioned another participant is received, the conference management server may transmit a second presence setting request so as to enable the first participant and the participant replying the participation response to at least subscribe a participant list of the chat to the presence server, and the presence management means of the presence server may carry out a setting so as to enable the first participant and the participant replying the participation response to at least subscribe the participant list of the chat as the presence data in response to the second presence setting request.

In addition, when the call-in request to the chat by the first participant of the voice-based teleconference includes data representing the end of the voice-based teleconference, the conference management server may transmit a third presence setting request so as to delete at least the first participant and the participant replying the participation response from the participant list of the voice-based teleconference, to the presence server, and the presence management means of the presence server may update the participant list of the voice-based teleconference managed as the presence data according to the third presence setting request.

Furthermore, the conference management server may transmit a request for stopping a routing of voice data for the participants deleted from the participant list of the voice-based teleconference to a computer carrying out a voice communication processing for the participants of the voice-based teleconference.

In addition, a communication control method according to a fourth aspect of this invention includes: when a call-in request to the chat for another participant of a voice-based teleconference by a first participant of the voice-based teleconference is received, a step of transmitting a participation request to the chat to a terminal of the aforementioned another participant; and when a participation response to the chat by the aforementioned another participant is received, a step of carrying out a management setting of information concerning delivery destinations so as to enable the first participant and the participant replying the participation response to update and subscribe dialogue contents of the chat managed as data delivered to the subscribers when updated.

Thus, by holding data that are the dialogue contents of the chat and information concerning the delivery destinations of the data, and carrying out a setting in response to receipt of the participation response to the chat by the participant of the voice-based teleconference, it becomes possible that the conference is shifted from the voice-based teleconference to the character-based teleconference and both of the conferences coexist.

It is possible to create a program to realize functions of the aforementioned conference management server and the presence server, and this program is stored into a storage medium or a storage device such as a flexible disk, a CD-ROM, a magneto-optical disk, a semiconductor memory, or a hard disk. In addition, the program may be distributed as digital signals over a network in some cases. Incidentally, intermediate processing results are temporarily stored in the storage device such as a memory.

### [Brief description of the drawings]

Fig. 1 is a system configuration diagram according to one embodiment of this invention;
Fig. 2 is a functional block diagram of a user terminal;
Fig. 3 is a functional block diagram of a user A presence manager;
Fig. 4 is a functional block diagram of a conference A presence manager;
Fig. 5 is a schematic diagram of data stored in a presence data storage in the user A presence manager;
Fig. 6 is a schematic diagram of data stored in a presence data storage in the user A presence manager;
Fig. 7 is a diagram showing an example of presence data whose presence ID is "FloorUser";
Fig. 8 is a diagram showing an example of presence data whose presence ID is "JoinUser";
Fig. 9 is a diagram showing an example of presence data whose presence ID is "Member";
Fig. 10 is a diagram showing an example of presence data whose presence ID is "ChatUser";
Fig. 11 is a diagram showing an example of presence data whose presence ID is "Chat";
Fig. 12 is a diagram showing a first portion of a processing flow according to one embodiment of this invention;
Fig. 13 is a diagram showing a second portion of the processing flow according to one embodiment of this invention;
Fig. 14 is a diagram showing a third portion of the processing flow according to one embodiment of this invention;
Fig. 15 is a diagram showing a fourth portion of the processing flow according to one embodiment of this invention;
Fig. 16 is a diagram showing a fifth portion of the processing flow according to one embodiment of this invention;
Fig. 17 is a diagram showing a sixth portion of the processing flow according to one embodiment of this invention;
Fig. 18 is a diagram showing a seventh portion of the processing flow according to one embodiment of this invention;
Fig. 19 is a diagram showing an eighth portion of the processing flow according to one embodiment of this invention;
Fig. 20 is a diagram showing a ninth portion of the processing flow according to one embodiment of this invention;
Fig. 21 is a diagram showing a first portion of the processing flow of a chat start processing according to one embodiment of this invention;
Fig. 22 is a diagram showing a second portion of the processing flow of the chat start processing according to one embodiment of this invention;
Fig. 23 is a diagram showing a third portion of the processing flow of the chat start processing according to one embodiment of this invention;
Fig. 24 is a diagram showing a first portion of a processing flow of a chat shift processing according to one embodiment of this invention;
Fig. 25 is a diagram showing a second portion of the processing flow of the chat shift processing according to one embodiment of this invention;
Fig. 26 is a diagram showing a third portion of the processing flow of the chat shift processing according to one embodiment of this invention; and
Fig. 27 is a functional block diagram of a computer.

### [Best mode for carrying out the invention]

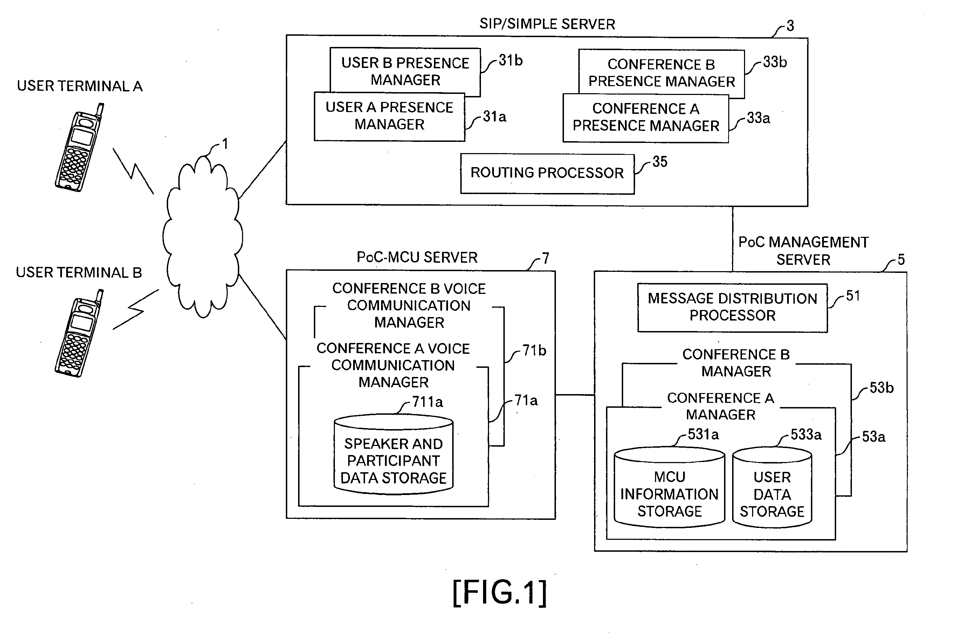

Fig. 1 shows a system outline diagram according to one embodiment of this invention. A network 1 such as a cellular phone network is connected with plural cellular phones (here, a user terminal A operated by a user A, and a user terminal B operated by a user B) through wireless base stations not shown in the figure. The cellular phone may be a Personal Handyphone System (PHS) terminal, and not only has a voice call function, but also can execute various application programs such as a mail client, a web browser, a client application in this embodiment and the like. In addition, the user terminals A and B may be portable terminals such as a Personal Digital Assistant (PDA) with the voice call function. The user terminals A and B in this embodiment will be explained by using a functional block diagram later.

The network 1 is connected with a SIP/SIMPLE server 3 and a Push-to-talk over Cellular (PoC) -Multipoint Communication Unit (MCU) server 7. In addition, the SIP/SIMPLE server 3 and the PoC-MCU server 7 are connected with a PoC management server 5. Incidentally, there is a case where the PoC management server 5 is also connected with the network 1, and thereby the SIP/SIMPLE server 3 and PoC-MCU server 7 are connected with the PoC management server 5. The presence server 3 and the PoC management server 5 may be one server computer having their functions.

The SIP/SIMPLE server 3 has a presence manager 31a of the user A, a presence manager 31b of the user B, a presence manager 33a of a conference A, a presence manager 33b of a conference B, and a routing processor 35. Here, in order to simplify the description, only the presence managers of the users A and B are shown. However, the presence managers are provided by the number of users. In addition, although only the presence managers of the conferences A and B are shown, the presence managers are provided by the number of conferences. Moreover, the SIP/SIMPLE server 3 includes processors not directly related to this embodiment such as processors carrying out a user authentication processing. However, they are not shown, here. The presence manager of the user and the presence manager of the conference will be explained by using functional block diagrams later.

The PoC management server 5 is also called a PoC control server, and is a server managing and controlling the teleconference, and includes conference managers 53 carrying out a processing for each conference (here, a conference A manager 53a carrying out a processing for the conference A, and a conference B manager 53b carrying out a processing for the conference B) and a message distribution processor 51 carrying out a distribution processing to transfer messages transferred from the routing processor 35 of the SIP/SIMPLE server 3 to a conference manager 53 in charge of the message. In addition, the conference manager 53 includes an MCU information storage 531 (here, a MCU information storage 531a of the conference A), and a user data storage 533 (here, a user data storage 533a of the conference A).

In addition, the PoC-MCU server 7 includes a conference voice communication manager 71 that manages and controls the voice communication for each conference (here, a conference A voice communication manager 71a carrying out a processing for the conference A and a conference B voice communication manager 71b carrying out a processing for the conference B), and the conference voice communication manager 71 includes a speaker and participant data storage 711 (here, a speaker and participant data storage 711a of the conference A).

In Fig. 1, the user terminal communicates with the SIP/SIMPLE server 3 by SIMPLE (SIP (Session Initiation Protocol) for Instant Messaging and Presence Leveraging Extensions)/TCP through the network 1, and communicates with the PoC-MCU server 7 by RTP (Real-time Transport Protocol) /UDP through the network 1. Thus, opponents of the user terminals are consolidated to the SIP/SIMPLE server 3 and the PoC-MCU server 7, and the using protocols are also consolidated to the aforementioned two protocols. That is, a system configuration is adopted in which a direct communication with other servers such as the PoC management server 5 using different protocols is prevented. Therefore, a response time can be shortened when the teleconference is carried out, and more smooth agenda proceedings are enabled.

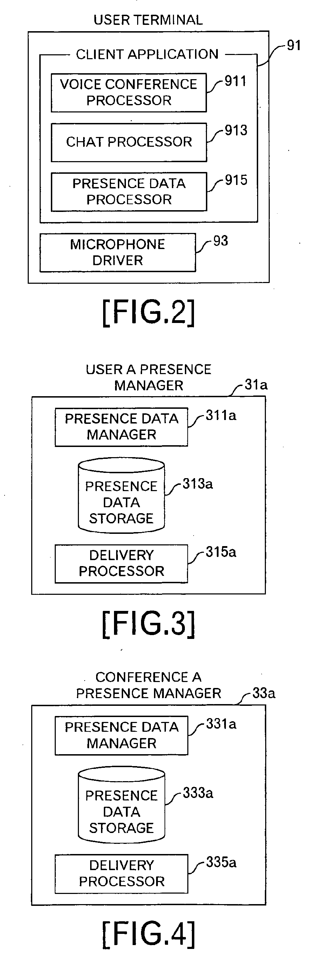

Next, Fig. 2 shows a functional block diagram of the user terminal. The user terminal includes a client application 91 to carry out a processing in this embodiment, and a microphone driver 93 of a microphone provided in the user terminal. The client application 91 includes a voice conference processor 911, a chat processor 913 and a presence data processor 915. Incidentally, functions not directly related to this embodiment are not shown in this figure.

In addition, Fig. 3 shows a functional block diagram of the presence manager 31a of the user A. The presence manager 31a of the user A includes a presence data manager 311a, a presence data storage 313a, and a delivery processor 315a. The presence manager 31a of the user A cooperates with the client application 91 of the user terminal A to update data stored in the presence data storage 313a, and carries out a delivery processing of the data stored in the presence data storage 313a.

Furthermore, Fig. 4 shows a functional block diagram of the presence manager 33a of the conference A. The presence manager 33a of the conference A includes a presence data manager 331a, a presence data storage 333a, and a delivery processor 335a. The presence manager 33a of the conference A cooperates with the conference A manager 53 a of the PoC manager server 5 and the client application 91 of the user to update data stored in the presence data storage 333a, and carries out a delivery processing of the data stored in the presence data storage 333a.

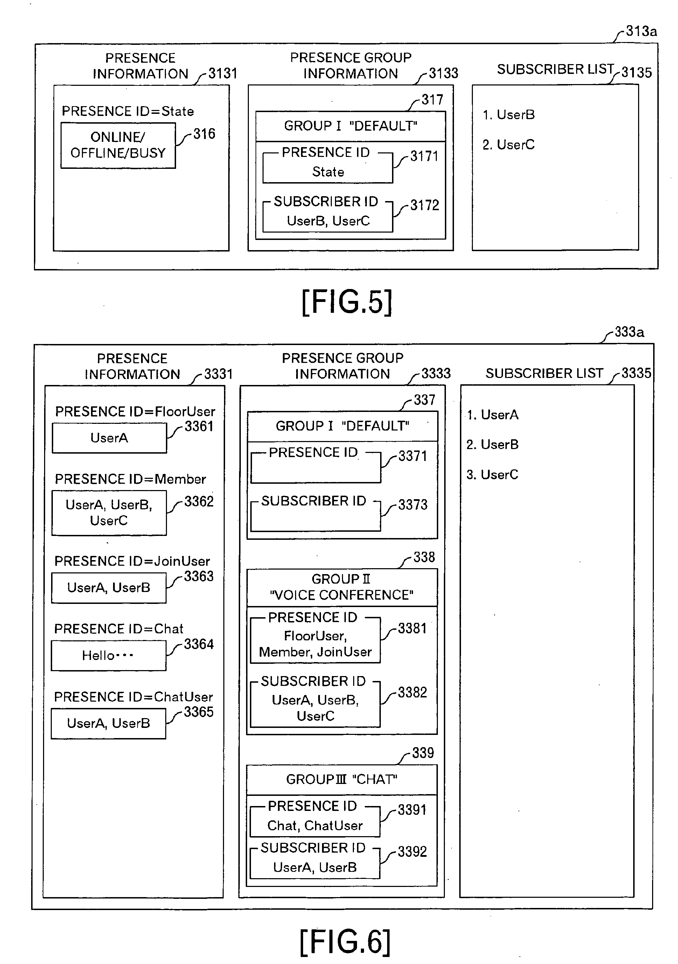

Fig. 5 shows an example of data stored in the presence data storage 313a included in the user A presence manager 31a. In the example of Fig. 5, the presence data storage 313a includes a presence information storage area 3131, a presence group information storage area 3133, and a subscriber list storage area 3135. The presence information storage area 3131 is an area to store, for each presence data item, presence data (here, state information of the user or user terminal), and includes an area 316 to store the presence data (here, ONLINE, OFFLINE, or BUSY) whose presence ID, which is an ID of the presence data item, is "state". The number of presence data items is not limited, but only the presence data item showing the state of the user terminal is indicated in this embodiment. The presence group information storage area 3133 is an area to store data to associate the presence data item (i.e. presence ID) with the delivery destination user ID (i.e. subscriber ID). Here, it includes an area 317 including an area 3171 to store presence IDs that belong to a group I "default", which is a presence group, and an area 3172 to store user IDs (i.e. subscriber IDs). The default group is a group to which the subscriber is initially registered. The number of groups is not limited, and an arbitrary number of groups can be defined. Here, the user IDs (i.e. subscriber IDs) of the users for whom the information delivery is approved such as the user B and user C are registered in the subscriber list storage area 3135. The number of subscribers is not limited, and an arbitrary number of subscribers can be registered.

In addition, Fig. 6 shows an example of data stored in the presence data storage 333a included in the conference A presence manager 33a. In the example of FIG. 6, the presence data storage 333a includes a presence information storage area 3331, a presence group information storage area 3333, and a subscriber list storage area 3335. The presence information storage area 3331 includes an area 3361 to store the presence data (here, subscriber ID of the user having a speaker right (also called a right to speak)) whose presence ID, which is an ID of the presence data item, is "FloorUser", an area 3362 to store the presence data (here, subscriber ID of the user called to the voice conference) whose presence ID, which an ID of the presence data item, is "Member", an area 3363 to store the presence data (here, subscriber ID of the user participating the voice conference) whose presence ID, which an ID of the presence data item, is "JoinUser", an area 3364 to store the presence data (here, argument contents of the chat (character-based teleconference) whose presence ID, which an ID of the presence data item, is "Chat", and an area 3365 to store the presence data (here, subscriber ID of the participating user of the chat) whose presence ID, which an ID of the presence data item, is "ChatUser".

In addition, the presence group information storage area 3333 includes an area 337 including an area 3371 to store presence IDs belonging to a group I "default", which is a presence group, and an area 3373 to store user IDs (i.e. subscriber IDs), an area 338 including an area 3381 to store presence IDs belonging to a group II "voice conference", which is a presence group, and an area 3382 to store user IDs (i.e. subscriber IDs), and area 339 including an area 3391 to store presence IDs belonging to a group III "chat", which is a presence group, and an area 3392 to store user IDs (i.e. subscriber IDs). The subscriber IDs of the users who participate in the voice conference are stored in the are 3382, and data disclosed to the users who participate in the voice conference is the presence data whose presence IDs are "FloorUser", "Member" and "JoinUser". That is, the subscriber ID of a person who has the right to speak, a list of the subscriber IDs of the called users, and a list of the subscriber IDs of the participating users. In addition, the subscriber ID of the user participating in the chat is stored in the area 3392, and data disclosed to the users who participate in the chat is the presence data whose presence IDs are "Chat" and "ChatUser". That is, the list of the subscriber IDs of the chat participants and the argument contents of the chat are presented. Here, the user IDs (i.e. subscriber IDs) of the users for whom the information delivery is approval such as the user A, user B and user C are registered in the subscriber list storage area 3335.

The presence data whose presence ID is "Chat" of the presence information area 3331 and the presence data whose presence ID is "ChatUser" correspond to the group III "chat" 339 of the presence group information area 3333, and it is possible to provide plural sets of a data area of a group associated with the chat such as the group III "chat" and a group IV "chat", an area to store the subscriber IDs of the participating users of the chat corresponding to the data area, and an area to store the chat contents in the respectively distinguishable form in the presence data storage 333a for one conference.

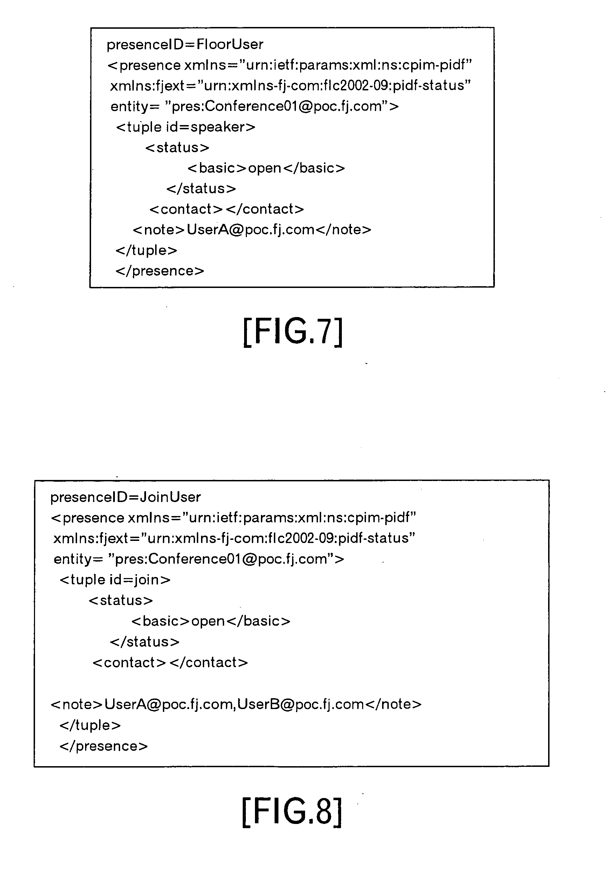

Figs. 5 and 6 schematically show data stored in the presence data storage, and for example, data of the tag data structure as shown in Fig. 7 is stored in the area 3361 for the presence data whose presence ID is "FloorUser", for example. The example of Fig. 7 is described by using XML (extensible Markup Language) basically in conformity with OMA (Open Mobile Alliance). Here, a point to which an attention should be paid is a point that an owner of the presence data whose presence ID is "FloorUser" is identified by SIP-URL (Uniform Resource Locator) as Conference01@poc.fj.com in a phrase "entity = "pres: Conference01@poc.fj.com" of the fourth line from the top. Here, the owner of this presence data is the conference A manager 53a of the PoC management server 5, and this presence data is updated by the conference A manager 53a. In addition, the SIP-URL of the conference A manager 53a is "Conference01@poc.fj.com". Furthermore, the SIP-URL "UserA@poc.fj.com" is registered as the user ID of a holder of the right to speak, between tags <note> and </note>. In Figs. 5 and 6, by simply indicating "UserA@poc.fj.com", "UserA" is indicated.

Similarly, data having the tag data structure as shown in, for example, Fig. 8 is stored in the area 3363 for the presence data whose presence ID is "JoinUser". In the example of Fig. 8, similarly to Fig. 7, the owner of this presence data is identified by the SIP-URL "Conference01@poc.fj.com", and the SIP-URLs "UserA@poc.fj.com, UserB@poc.fj.com" of the participants of the voice conference are registered as the user IDs, between the tags <note> and </note>.

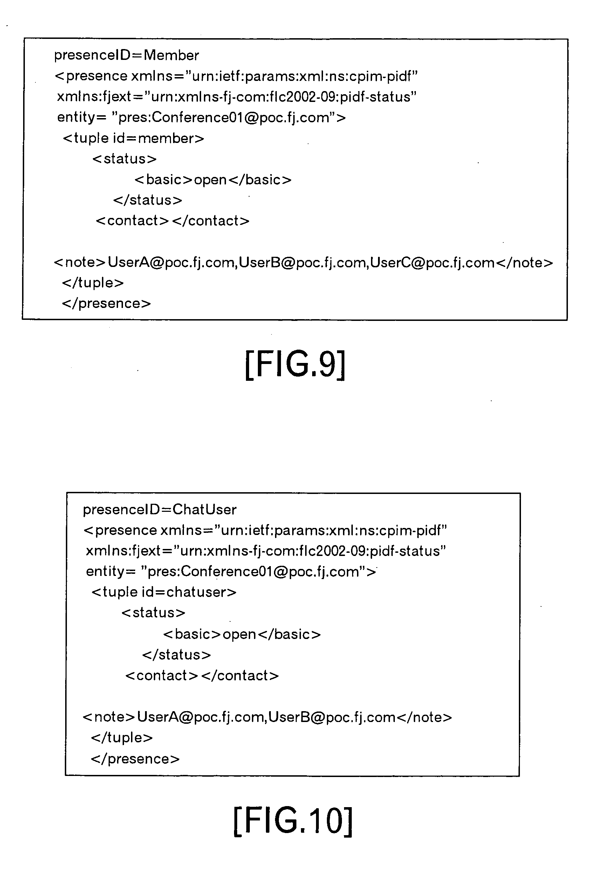

Furthermore, data of the tag data structure as shown in, for example, Fig. 9 is stored in the area 3362 for the presence data whose presence ID is "Member". In the example of Fig. 9, similarly to Fig. 7, the owner of this presence data is identified by the SIP-URL "Conference01@poc.fj.com", and the SIP-URLs "UserA@poc.fj.con, UserB@poc.fj.com, UserC@poc.fj.com" of the users called into the voice conference are registered as the user IDs, between the tags <note> and </note>.

In addition, data of the tag data structure as shown in, for example, Fig. 10 is stored in the area 3365 for the presence data whose presence ID is "ChatUser". In the example of Fig. 10, similarly to Fig. 7, the owner of this presence data is identified by the SIP-URL "Conference01@poc.fj.com", and the SIP-URLs "UserA@poc.fj.com, UserB@poc.fj.com" of the users participating in the chat are registered as the user IDs, between the tags <note> and </note>.

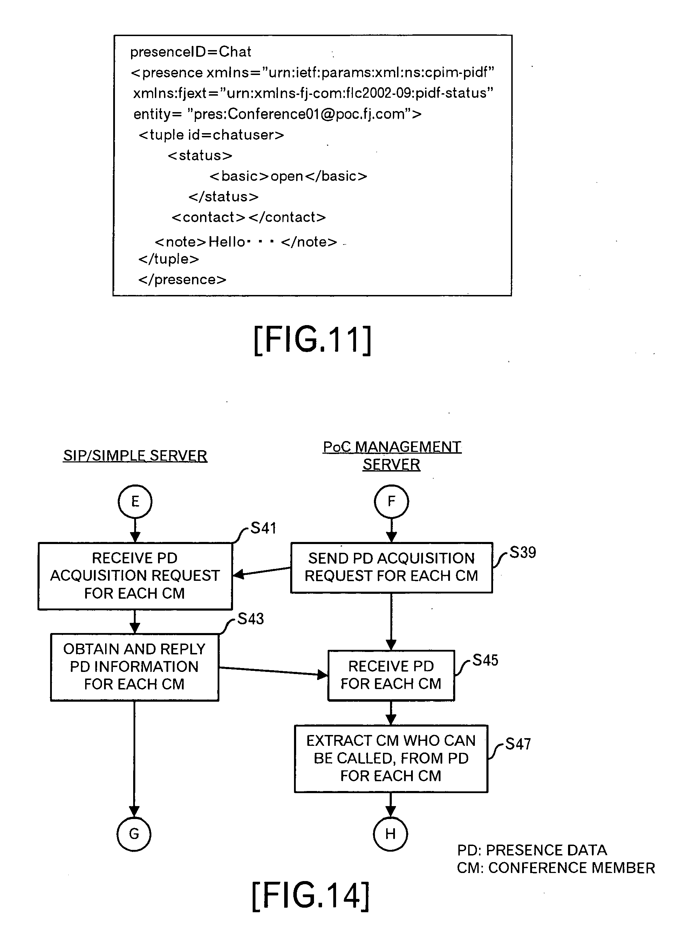

Furthermore, data of the tag data structure as shown in, for example, Fig. 11 is stored in the area 3364 for the presence data whose presence ID is "Chat". In the example of Fig. 11, similarly to Fig. 7, the owner of this presence data is identified by the SIP-URL "Conference01@poc.fj.com", and the argument contents "Hello...." in the chat are registered between the tags <note> and </note>. Incidentally, the owner of this presence data is the conference A manager 53a, and it is the same as that of the aforementioned other presence data. However, it is assumed that a setting is carried out so as to give the right to update to the users whose user IDs are stored in the area 3365 for the presence data whose presence ID is "ChatUser".

The presence data is basically updated by the owner, and when updated, the delivery processor delivers the presence data to users of user IDs associated with the presence ID of the presence data.

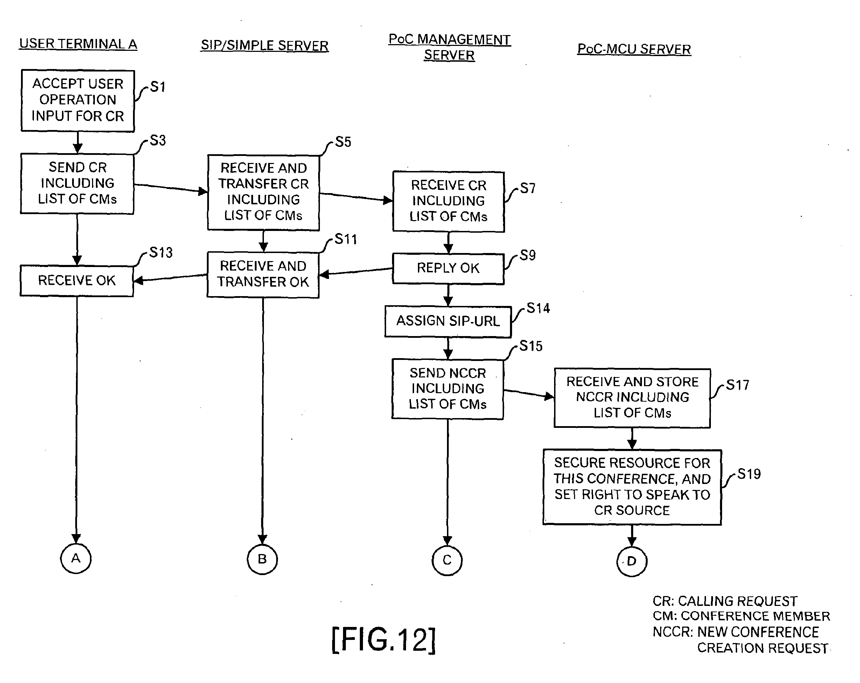

Next, a processing flow of the system shown in Figs. 1 to 4 will be explained by using Figs. 12 to 26. Incidentally, all of the users have logged into the SIP/SIMPLE server 3, and have been authenticated. Furthermore, an IP address of the user terminal has been associated with the user ID (SIP-URL) in the SIP/SIMPLE server 3. First, the user A operates the user A to input a call instruction by designating members to be called into the voice-based teleconference in order to start the conference. The voice conference processor 911 of the client application 91 in the user terminal A accepts the user operation input for the calling instruction of the member to be called into the voice-based teleconference (step S1), and transmits a calling request including a list of conference members (e.g. a list of SIP-URLs) to the SIP/SIMPLE server 3 (step S3). The routing processor 35 of the SIP/SIMPLE server 3 receives the calling request including the list of the conference members from the user terminal A, and transfers the request to the PoC management server 5 when it is judged to be the calling request (step S5). The message distribution processor 51 of the PoC management server 5 receives the calling request including the list of the conference members from the routing processor 35 of the SIP/SIMPLE server 3 (step S7). In response to this receipt, the message distribution processor 51 of the PoC management server 5 replies an OK response (step S9). When receiving the OK response from the PoC management server 5, the routing processor 35 of the SIP/SIMPLE server 3 transfers the OK response to the user terminal A (step S11). The user terminal A receives the OK response from the SIP/SIMPLE server 3 (step S13). This enables the user terminal A to recognize the calling request is received by the PoC management server 5.

When receiving the calling request including the list of the conference members, the message distribution processor 51 of the PoC management server 5 newly activates the conference manager 53 (e.g. newly activates the conference A manager 53a) because the new conference is carried out, and assigns the SIP-URL to the conference A manager 53a (step S14). The conference A manager 53a stores the list of the conference members into the user data storage 533a, and transmits a new conference creation request including the list of the conference members to the PoC-MCU server 7 (step S15). In addition, the list of the conference members includes the user ID of the calling request source user and the IP address of that user terminal, and the user is identified as the holder of the right to speak.

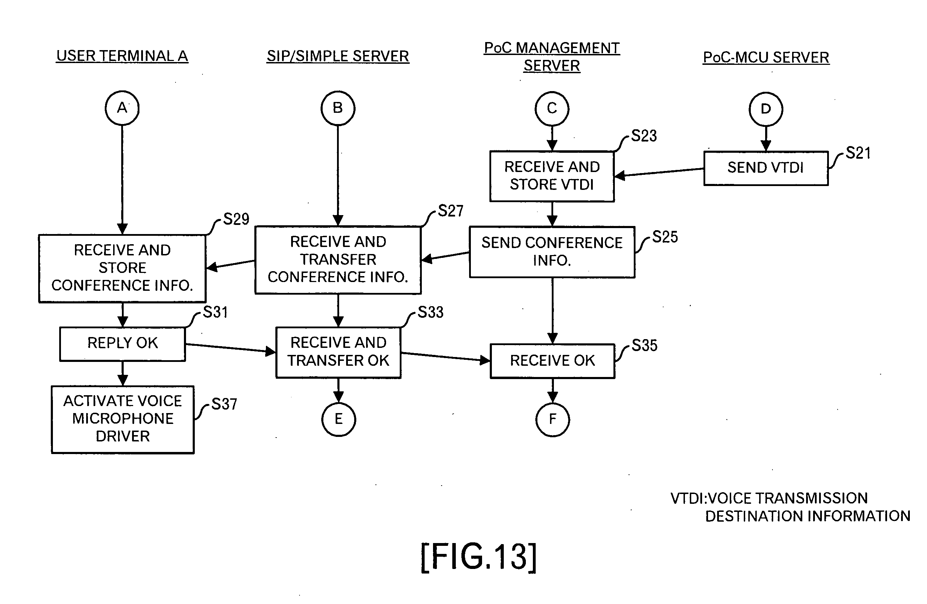

When receiving the new conference creation request including the list of the conference members, the PoC-MCU server 7 newly activates the conference voice communication manager 71 (e.g. the conference A voice communication manager 71a) in order to secure the resources for the new conference. Then, the conference A voice communication manager 71a stores the list of the conference members into the speaker and participant data storage 711a (step S17). Incidentally, the conference A voice communication manager 71a holds the SIP-URL of the conference A manager 53a, and thereby it becomes possible to respond to an instruction from the conference A manager 53a. Then, the conference A voice communication manager 71a secures the resources used in the conference relating to the calling request, that is, the IP address, the port number and the like, and further sets the right to speak to the calling request source user (step S19). As for the user having the right to speak, data is held in the speaker and participant data storage 711a in the distinguishable form. In this embodiment, only the person who has the right to speak can cause the PoC-MCU server 7 to transfer the voice data to the other participants. After this, the processing shifts to a processing of Fig. 13 through terminals A to D. Incidentally, the IP address of the user terminal of the calling request source user is registered in the speaker and participant data storage 711a at this stage.

The processing subsequent to the terminals A to D will be explained by using Fig. 13. The conference A voice communication manager 71a of the PoC-MCU server 7 transmits the IP address and the port number that are the resources secured at the step S19 as the voice transmission destination information to the PoC management server 5 (step S21). The conference A manager 53a of the PoC management server 5 receives the voice transmission destination information from the PoC-MCU server 7, and stores the information into the MCU information storage 531a (step S23). Then, the conference A manager 53a uses data stored in the MCU information storage 531a to transmit the voice transmission destination information (the IP address and the port number of the PoC-MCU server 7) and the SIP-URL of the conference A manager 53a as the conference information to the SIP/SIMPLE server 3 (step S25). When receiving the conference information from the PoC management server 5, the routing processor 35 of the SIP/SIMPLE server 3 transfers the conference information to the user terminal A of the calling request source (step S27). Incidentally, at this timing, the presence manager (here, the conference A presence manager 33a) of the conference may be activated based on the received conference information.

The voice conference processor 911 of the client application 91 in the user terminal A receives the conference information from the SIP/SIMPLE server 3, and stores the information into a storage device (step S29). The voice conference processor 911 replies an OK response to the SIP/SIMPLE server 3 (step S31). When receiving the OK response from the user terminal A, the routing processor 35 of the SIP/SIMPLE server 3 transfers the OK response to the PoC management server 5 (step S33). The conference A manager 53a of the PoC management server 5 receives the OK response from the SIP/SIMPLE server 3 (step S35). Incidentally, the message distribution processor 51 receives a message (here, the OK response) from the SIP/SIMPLE server 3, and transfers the message to the conference A manager 53a in charge of the message. However, in the following explanation, the explanation for the receipt of the message distribution processor 51 is omitted.

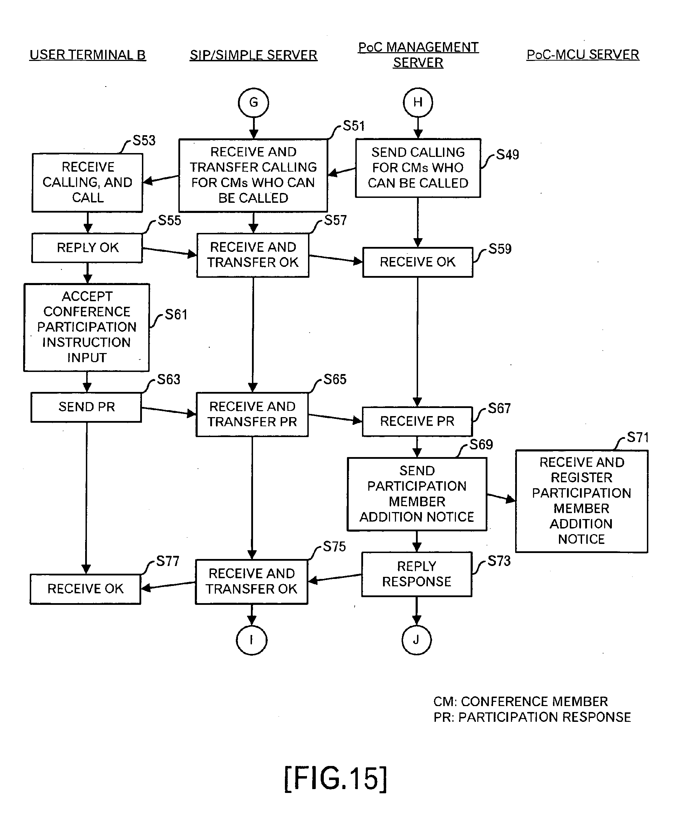

In addition, in response to the receipt of the conference information, the voice conference processor 911 of the client application 91 in the user terminal A activates the microphone driver 93 (step S37). That is, the microphone of the user terminal A detects the voice of the user A, and converts it into electrical signals, and the microphone driver 93 generates voice packets in order to transmit the voice received by the microphone. Thus, the user terminal A can transmit the voice packets to the PoC-MCU server 7 according to the IP address and the port number, which are included in the received conference information. However, even when the voice packets are transmitted to the PoC-MCU server 7 at this stage, other participants are not identified. Therefore, the PoC-MCU server 7 never copies and transfers the voice packets. The processing shifts to a processing of Fig. 14 through terminals E and F.

Next, the processing subsequent to the terminals E and F will be explained by using Fig. 14. The conference A manager 53a of the PoC management server 5 uses the data stored in the user data storage 533a to transmit a presence data acquisition request of each conference member except the calling request source (step S39). The presence data acquisition request is transmitted for each conference member. The presence manager 31 of each conference member in the SIP/SIMPLE server 3 receives the presence data acquisition request of each conference member from the PoC management server 5 (step S41). Normally, only the user can update his or her presence data, and persons who are allowed by the user can subscribe the presence data. Therefore, the PoC management server 5 cannot normally obtain the presence data of the conference members. However, the presence data manager 311 is set in advance so as to enable to refer to the presence data without the subscription approval when the request is received from the PoC management server 5. Therefore, the presence data manager 311 of the presence manager 31, which received the presence data acquisition request, reads out the presence data representing the state of the user or the user terminal of the conference member from the presence data storage 313, and transmits the data to the PoC management server 5 (step S43).

The conference A manager 53a of the PoC management server 5 receives the presence data of each conference member from the SIP/SIMPLE server 3 (step S45), and extracts conference members who can be called from the presence data of each conference member (step S47). That is, the conference members whose presence data indicates a state (e.g. ONLINE) in which the call can be carried out are extracted. When the state is "OFFLINE" or "BUSY", the calling processing described below is not carried out because the calling in the voice conference is impossible. This enables the calling processing to be speedy. However, the processing from the steps S39 to S47 is optional. The processing shifts to a processing of Fig. 15 through terminals G and H. Incidentally, in order to simplify the explanation, it is supposed that the conference member to be called is mere the user B operating the user terminal B.

The processing subsequent to the terminals G and H will be explained by using Fig. 15. The conference A manager 53a of the PoC management server 5 uses the data stored in the user data storage 533a and the MCU information storage 531a to transmit a calling to the conference members who can be called, which includes the conference information (the SIP-URL of the conference A manager 53a, and the IP address and the port number of the PoC-MCU server 7), to the SIP/SIMPLE server 3 (step S49). Incidentally, this calling includes data of the calling request source user. The routing processor 35 of the SIP/SIMPLE server 3 receives the call to the conference members who can be called, which includes the conference information, from the PoC management server 5, and transfers the calling to the user terminal of each conference member (step S51). Here, the voice conference processor 911 of the user terminal B receives the calling including the conference information from the SIP/SIMPLE server 3, and carries out a processing according to the calling (step S53). For example, by ringing the phone at arrival or displaying a predetermined display on the display device, the receipt of the calling is notified to the user B. Incidentally, the received conference information is stored in the storage device and used when transmitting the participation response later.

The voice conference processor 911 of the user terminal B transmits the OK response to the calling to the SIP/SIMPLE server 3 (step S55). The routing processor 35 of the SIP/SIMPLE server 3 receives the OK from the user terminal B, and transfers the response to the PoC management server 5 (step S57). The conference A manager 53a of the PoC management server 5 receives the OK response from the SIP/SIMPLE server 3 (step S59).

In response to the call at the step S53, the user B judges whether or not he or she participants in the voice conference. When he or she participating in the voice conference, he or she operates the user terminal B to input a conference participation instruction. The voice conference processor 911 of the user terminal B accepts the conference participation instruction by the user B (step S61), and transmits a participation response to the SIP/SIMPLE server 3 (step S63). When receiving the participation response, the routing processor 35 of the SIP/SIMPLE server 3 transfers the participation response to the PoC management server 5 (step S65). The conference A manager 53a of the PoC management server 5 receives the participation response from the user B from the SIP/SIMPLE server 3 (step S67). The conference A manager 53a registers the user ID (i.e. SIP-URL) of the user who carried out the participation response and the IP address of the user terminal in the user data storage 533a as the participant. In addition, the conference A manager 53a transmits a participating member addition notice including the user ID (i.e. SIP-URL) of the user who carried out the participation response and the IP address of the user terminal to the PoC-MCU server 7 (step S69). The conference A voice communication manager 71a fo the PoC-MCU server 7 receives the participating member addition notice including the user ID and IP address of the participant from the PoC management server 5, and registers the user ID and P address of the participant into the speaker and participant data storage 711a (step S71).

After the step S69, the conference A manager 53a transmits the OK response to the SIP/SIMPLE server 3 (step S73). The routing processor 35 of the SIP/SIMPLE server 3 receives the OK response from the PoC management server 5, and transfers the OK response to the user terminal B (step S75). The user terminal B receives the OK response from the SIP/SIMPLE server 3 (step S77).

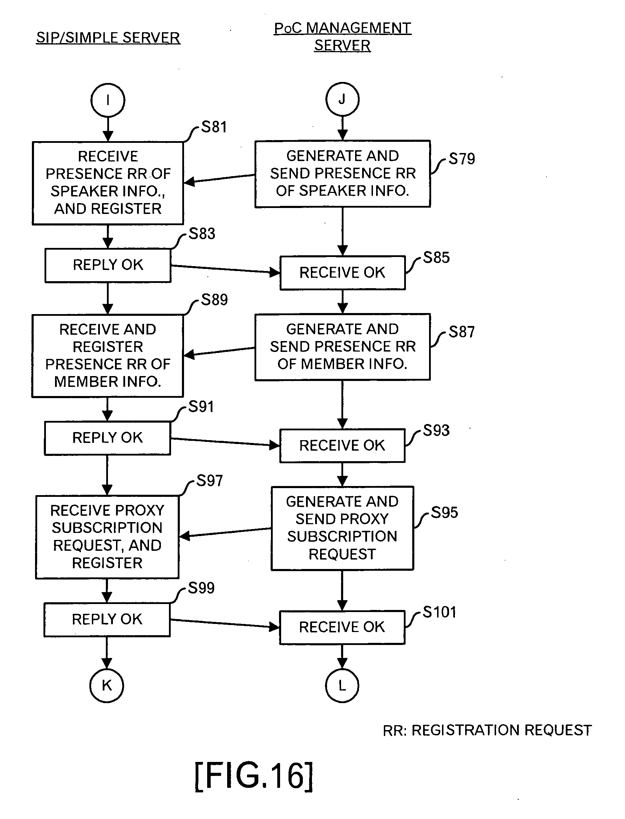

Incidentally, the processing of Fig. 15 is carried out for each conference member who can be called. In addition, a processing of Fig. 16 shifts to the processing through terminals I and J.

The processing subsequent to the terminals I and J will be explained by using Fig. 16. The conference A manager 53a of the PoC management server 5 uses the data stored in the user data storage 533a to generate a presence registration request of the speaker information including the user ID of the user who has the right to speak, and transmits the request to the SIP/SIMPLE server 3 (step S79). More specifically, it requests to register the user ID of the user having the right to speak as the presence data whose owner is the conference A manager 53a and whose presence ID is "FloorUser". The SIP/SIMPLE server 3 receives the presence registration request of the speaker information from the PoC management server 5. When the conference A presence manager 33a for the conference A manager 53a is not activated, the conference A presence manager 33a is activated at this timing. Then, the presence data manager 331a of the conference A presence manager 33a stores the user ID of the user having the right to speak as the presence data into the presence data storage 333a in association with the presence ID ("FloorUser") relating to the received presence registration request (step S81). As shown in Fig. 6, the user ID "UserA" of the user having the right to speak is registered into the area 3361. In addition, the conference A presence manager 33a transmits the OK response to the PoC management server 5 (step S83). The conference A manager 53a of the PoC management server 5 receives the OK response from the SIP/SIMPLE server 3 (step S85).

Furthermore, the conference A manager 53a of the PoC management server 5 uses the data stored in the user data storage 533a to generate a presence registration request of the member information including the information of the conference members including the user who carried out the calling request, and transmits the request to the SIP/SIMPLE server 3 (step S87). More specifically, it requests to register the user IDs of the conference members including the user who carried out the calling request as the presence data whose presence ID is "Member" and whose owner is the conference A manager 53a. The conference A presence manager 33a of the SIP/SIMPLE server 3 receives the presence registration request of the member information from the PoC management server 5, and the presence data manager 331a of the conference A presence manager 33a stores the presence data (in the example, of Fig. 6, "UserA, UserB, UserC") into the presence data storage 333a in association with the presence ID ("Member") relating to the received presence registration request (step S89). In addition, the conference A presence manager 33a transmits the OK response to the PoC management server 5 (step S91). The conference A manager 53a of the PoC management server 5 receives the OK response from the SIP/SIMPLE server 3 (step S93).

In addition, the conference manager 53a of the PoC management server 5 uses the data stored in the user data storage 533a to generate a proxy subscription request for the conference members including the user who carried out the calling request, and transmits the request to the SIP/SIMPLE server 3 (step S95). More specifically, it requests to register the conference members into the subscriber list storage area 335 in the presence data storage 333a and the area 3382 for the subscriber IDs in the area 338 of the group II "voice conference" in the presence group information storage area 3333. Incidentally, it may request the SIP/SIMPLE server 3 to register the user who carried out the calling request and the users who transmitted the participation response, not the conference members. However, for each participation response, it is necessary to carry out the proxy subscription for the user relating to the participation response. It is also possible to adopt either a method for delivering the presence data such as the participation state, the holder of the right to speak and the like to the users who transmitted the participation response or a method for delivery the presence data to the called users. This is because it depends on the publication policy of the conference. However, primarily, each user requiring the subscription requests the subscription of the presence data, and after obtaining the permission from the owner of the presence data, each user is registered as the subscriber. Therefore, primarily, each user who participates in the conference or was called must access the SIP/SIMPLE server 3 to request the subscription registration. However, in this embodiment, according to the characteristic of the conference, the PoC management server 5 carries out the proxy subscription registration in a viewpoint in which the subscription of the presence data such as the participation state, the holder of the right to speak and the like is necessary information for the participants (or users who were called) and a viewpoint in which the data communication volume increases in the wireless section when each user is caused to carry out the subscription registration, the communication bandwidth is uselessly wasted, and the progress of the conference becomes slow. Incidentally, the owner of the presence data storage 333a of the conference A presence manager 33a is the conference A manager 53a, and there is no large problem in the proxy subscription registration by the owner.

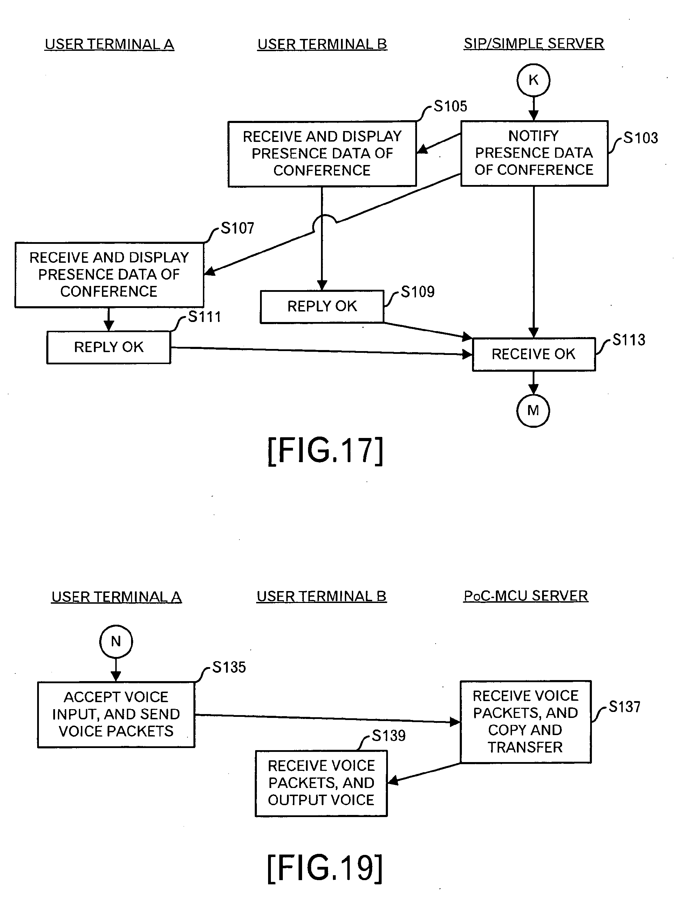

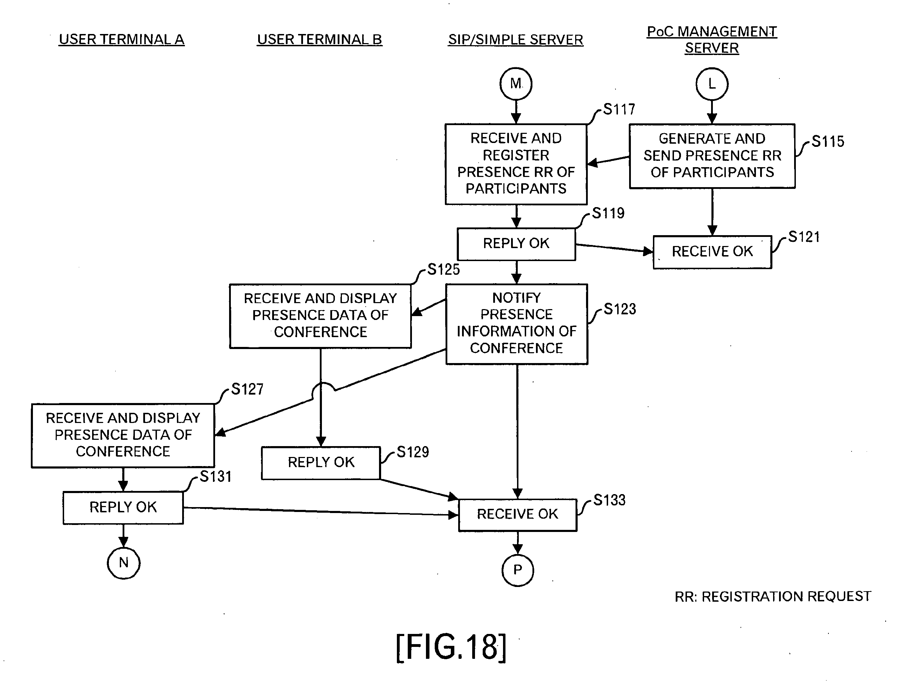

The conference presence manager 33a of the SIP/SIMPLE server 3 receives the proxy subscription request for the conference members including the user who carried out the calling request from the PoC management server 5, registers the conference members (or participants) into the subscriber list storage area 3335 of the presence data storage 333a, and further registers the conference members (or participants) into the area 3382 for the subscriber IDs in the area 338 of the group II "voice conference" in the presence group information storage area 3333 (step S97). In addition, the conference A presence manager 33a transmits the OK response to the PoC server 5 (step S99). The conference A manager 53a of the PoC management server 5 receives the OK response from the SIP/SIMPLE server 3 (step S101). The processing shifts to a processing of Figs. 17 and 18 through the terminals K and L.

Thus, when the conference members (or participants) are registered in the subscriber list storage area 3335 and the area 3382 for the subscriber IDs in the area 338 of the group II "voice conference" in the presence group information storage area 3333, the presence data of the presence IDs registered in the area 3381 for the presence IDs in the area 338 of the group II "voice conference" is delivered to the conference members (or participants) by the delivery processor 335a.

Next, the processing subsequent to the terminal K will be explained by using Fig. 17. The delivery processor 335a of the conference presence manager 33a in the SIP/SIMPLE server 3 carries out a notification processing of the presence data (the user ID of the holder of the right to speak, the user IDs of the conference members, and the user IDs of the participants) of the conference according to the states in the presence data storage 333a (step S103). Here, the presence data of the conference is transmitted to the user terminals A and B. The presence data processor 915 of the user terminal B receives the presence data of the conference from the SIP/SIMPLE server 3, and displays the data on the display device (step S105). Similarly, the presence data processor 915 of the user terminal A receives the presence data of the conference from the SIP/SIMPLE server 3, and displays the data on the display device (step S107).

At this stage, because the participants have not been registered in the presence data storage 333a, the display in which only the conference members and the holder of the right to speak can be grasp is carried out. Then, the presence data processor 915 of the user terminal B replies the OK response to the SIP/SIMPLE server 3 (step S109), and the presence data processor 915 of the user terminal A also replies the OK response to the SIP/SIMPLE server 3 (step S111). The conference A presence manager 33a of the SIP/SIMPLE server 3 receives the OK response from the user terminals A and B (step S113). The processing shifts to a processing of Fig. 18 through a terminal M.

Next, the processing subsequent to the terminal L and M will be explained by using Fig. 18. The conference A manager 53a of the PoC management server 5 uses the data stored in the user data storage 533a to generate a presence registration request of the participants (including not only the users who transmitted the participation response but also the user who carried out the calling request), and transmits the request to the SIP/SIMPLE server 3 (step S115). More specifically, it requests to register the user IDs of the participants as the presence data whose presence ID is "JoinUser" and whose owner is the conference A manager 53a. The conference A presence manager 33a of the SIP/SIMPLE server 3 receives the presence registration request of the participants from the PoC management server 5, and the presence data manager 331a of the conference A presence manager 33a stores the presence ID ("JoinUser") and the presence data (in the example of Fig. 6, "UserA, UserB"), which relate to the received presence registration request, into the presence data storage 333a (step S117). In addition, the conference A presence manager 33a transmits the OK response to the PoC management server 5 (step S119). The conference A manager 53a of the PoC management server 5 receives the OK response from the SIP/SIMPLE server 3 (step S121).

Then, the delivery processor 335a of the conference A presence manager 33a in the SIP/SIMPLE server 3 carries out a notification processing of the presence data (user ID of the holder of the right to speak, user IDs of the conference members, and the user IDs of the participants) of the conference according to the state of the presence data storage 333a (step S123). Here, the presence data of the conference is transmitted to the user terminals A and B. The presence data processor 915 of the user terminal B receives the presence data of the conference from the SIP/SIMPLE server 3, and displays the data on the display device (step S125). Similarly, the presence data processor 915 of the user terminal A receives the presence data of the conference from the SIP/SIMPLE server 3, and displays the data on the display device (step S127).

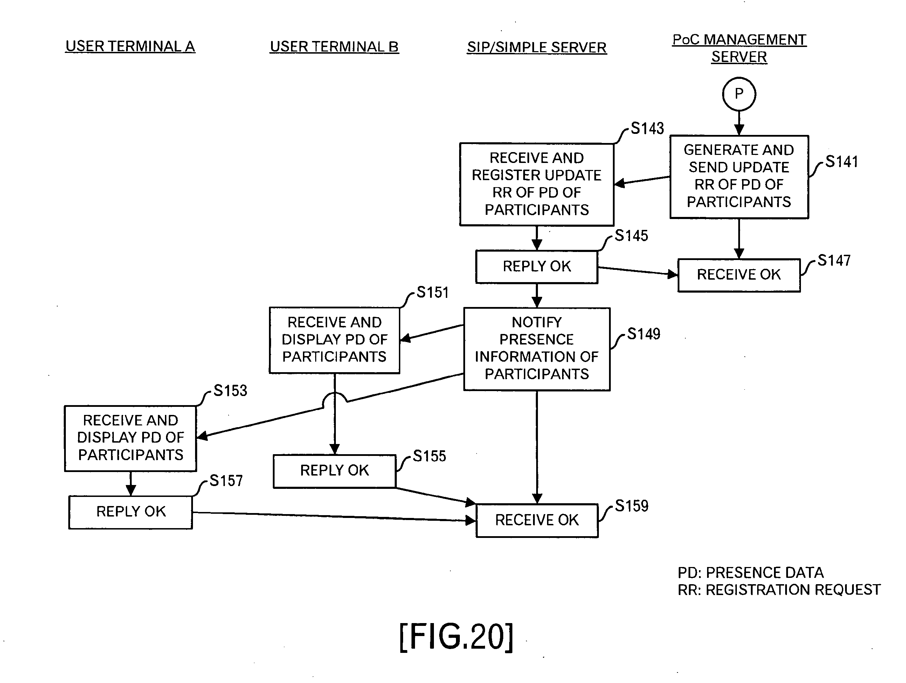

At this stage, because the participants have been registered into the presence data storage 333a at the step S117, a display in which the conference members, the participants, the holder of the right to speak and users who was called but does not participate can be grasp is carried out. Then, the presence data processor 915 of the user terminal B replies the OK response to the SIP/SIMPLE server 3 (step S129), and the presence processor 915 of the user terminal A also replies the OK response to the SIP/SIMPLE server 3 (step S131). The conference presence manager 33a of the SIP/SIMPLE server 3 receives the OK responses from the user terminals A and B (step S133). The processing shifts to a processing of Fig. 19 through a terminal N. The processing also shifts to a processing of Fig. 20 through a terminal P.

When the conference members were registered for the subscription at the step S97, the steps S115 to S133 are executed for each appearance of the new participant. When the participants were registered for the subscription at the step S97, the steps S115 to S133 are executed for each appearance of the new participant, the presence data is delivered to the users who have been registered for the subscription as the participants, and, furthermore, the steps S95 to S113 are executed and the presence data is delivered to the new participant.

When the processing shown in Fig. 18 has been completed, each participant of the teleconference can recognize other participants, and start the conference. Incidentally, because the user who carried out the calling request holds the right to speak, only this user can speak.

That is, the processing shown in Fig. 19 is carried out. Because the user A has the right to speak, the user A speaks to the user terminal A. The user terminal A accepts the voice input from the user A by the microphone, and the voice conference processor 911 generates the voice packets from the voice data generated by the microphone driver 93, and transmits the packets to the PoC-MCU server 7 (step S135). At this time, the IP address and the port number of the PoC-MCU server 7, which was received as the conference information, is used. That is, the voice packets are directly transmitted to the PoC-MCU server 7.

The conference A voice communication manager 71a of the PoC-MCU server 7 receives the voice packets from the user terminal A, and transfers the copy of the voice packets to the IP addresses of the participants, which are stored in the speaker and participant data storage 711a (step S137). The voice conference processor 911 of the client application 91 in the user terminal B receives the voice packets from the PoC-MCU server 7, and outputs the voice relating to the voice packets through a speaker driver and a speaker not shown. Thus, the voice-based teleconference is carried out. Incidentally, the movement of the right to speak is not the main portion of this embodiment. Therefore, the explanation is omitted, here.

Next, the processing subsequent to the terminal P will be explained by using Fig. 20. The conference A manager 53a of the PoC management server 5 uses the data stored in the user data storage 533a to generate an update registration request of the presence data so as to change, for each participant (including the user who carried out the calling request), the presence data of the participants to "BUSY" (or in the voice conference or the like), and transmits the request to the SIP/SIMPLE server 3 (step S141). More specifically, when assuming that the participants are the users A and B, it generates the presence data update registration request to change the data stored in the area 316 (whose presence ID is "State") of the presence information storage area 3131 in the presence data storage 313a of the user A presence manager 31a to "BUSY" or the like, and the presence data update registration request to change the data stored in the area 316 of the presence information storage area 3131 in the presence data storage 313b of the user B presence manager 31b to "BUSY" or the like, and transmits the requests to the SIP/SIMPLE server 3.

Primarily, the data of the presence data storage 313a in the user A presence manager 31a can be changed only by the user A. Similarly, the data of the presence data storage 313b in the user B presence manager 31b can be changed only by the user B. However, in this embodiment, in order to smoothly progress the voice conference and reduce the communication volume in the wireless section, the change is permitted to the PoC management server 5, specially.

The user A presence manager 31a (and the user B presence manager 31b. However, in the following, because of the duplication, the explanation is omitted.) of the SIP/SIMPLE server 3 receives the update registration request of the presence data of the participant from the PoC management server 5, and the presence data manager 311 of the user A presence manager 31a stores the presence data such as "BUSY" or the like in association with the presence ID "State" (step S143). The user A presence manager 31a of the SIP/SIMPLE server 3 transmits the OK response to the PoC management server 5 (step S145). The conference A manager 53a of the PoC management server 5 receives the OK response from the SIP/SIMPLE server 3 (step S147).

Thus, when the update of the presence data of the users A and B is carried out, the presence data of the user A or B is notified to the users who is registered as the subscribers of the presence ID "State". That is, the delivery processor 315 of the user A presence manager 31a in the SIP/SIMPLE server 3 carries out a notification processing of the presence data of the user A according to the state of the presence data storage 313a (step S149). In the example of Fig. 5, the presence data is transmitted to the users B and C. Incidentally, the similar processing for the user B presence manager 31b is carried out. However, the presence data of the user B is transmitted to the users A and C.

Then, the presence processor 915 of the terminal B receives the presence data of the user A from the SIP/SIMPLE server 3, and displays the data on the display device (step S151). Similarly, the presence data processor 915 of the user terminal A receives the presence data of the user B from the SIP/SIMPLE server 3, and displays the data on the display device (step S153). In the other user terminals, the display is changed, similarly. This enables other users who subscribe the state of the participants of the voice-based teleconference to recognize the participants cannot be reached because of BUSY.

Then, the presence data processor 915 of the user terminal B replies the OK response to the SIP/SIMPLE server 3 (step S155), and the presence data processor 915 of the user terminal A also replies the OK response to the SIP/SIMPLE server 3 (step S157). The user A presence manager 31a and the user B presence manager 31b of the SIP/SIMPLE server 3 receives the OK response to the user terminals A and B (step S159).

By carrying out such a processing, it becomes possible for the users to smoothly progress the voice-based teleconference, and the wireless communication bandwidth is not wasted.

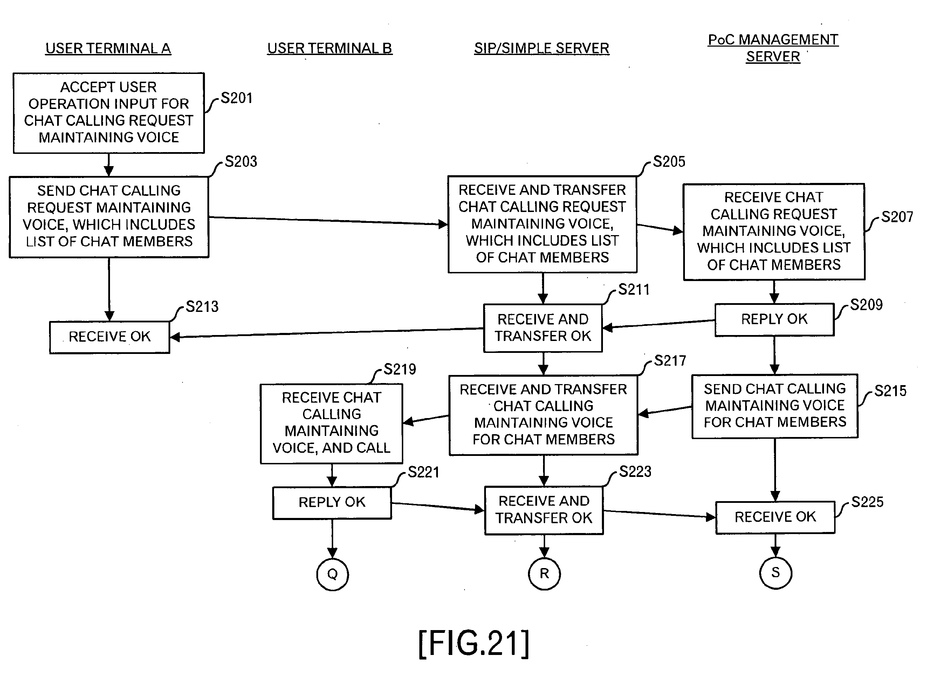

Next, a processing when starting the character-based teleconference (chat) on the way of the voice-based teleconference will be explained by using Figs. 21 to 23. First, in the voice-based teleconference in which the users A, B, C and the like participate, for example, a case where the user A unofficially carries out a meeting with the user B by the character-based chat not the voice will be explained. In this case, the voice-based teleconference is maintained.

First, the user A operates the user terminal A to designate the maintenance of the voice-based teleconference and the user B of the participant who is called into the chat. The chat processor 913 of the user terminal A accepts such a user operation input for a chat calling request maintaining the voice (step S201), and transmits the chat calling request maintaining the voice, which includes a list of the chat members (here, user B) to the SIP/SIMPLE server 3 (step S203). Incidentally, when there is no designation input for the calling destination from the user A, for example, all of the participants of the voice-based teleconference may be set as the calling destination. The routing processor 35 of the SIP/SIMPLE server 3 receives the chat calling request maintaining the voice, which includes the list of the chat members, from the user terminal A, and transfers the request to the PoC management server 5 (step S205).

The conference A manager 53a of the PoC management server 5 receives the calling request maintaining the voice, which includes the list of the chat members, from the SIP/SIMPLE server 3, and stores the list of the chat members into the user data storage 533a (step S207). Then, the conference A manager 53a of the PoC management server 5 replies the OK response to the SIP/SIMPLE server 3 (step S209). The routing processor 35 of the SIP/SIMPLE server 3 receives the OK response from the PoC management server 5, and transfers the response to the SIP/SIMPLE server 3 (step S213). The chat processor 913 of the user terminal A receives the OK response from the SIP/SIMPLE server 3 (step S213).

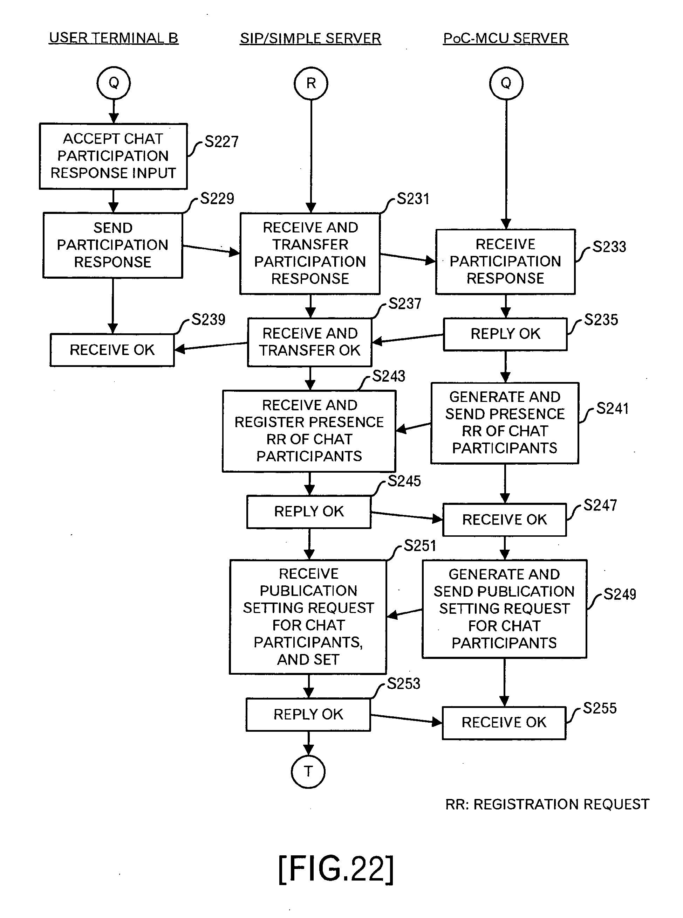

In addition, the conference A manager 53a of the PoC management server 5 transmits a chat calling maintaining the voice to the chat members (here, the user B) for each chat member according to the received list of the chat members to the SIP/SIMPLE server 3 (step S215). Incidentally, data about the calling source user is included in the chat calling. The routing processor 35 of the SIP/SIMPLE server 3 receives the chat calling maintaining the voice for the chat members from the PoC management server 5, and transfers the chat calling to the user B (step S217). The chat processor 913 of the user terminal B receives the chat calling maintaining the voice from the SIP/SIMPLE server 3, and carries out a chat calling processing such as a display for the chat calling, output of a predetermined voice or the like (step S219). Incidentally, the chat processor 913 of the user terminal B transmits the OK response to the SIP/SIMPLE server 3 (step S221). The routing processor 35 of the SIP/SIMPLE server 3 receives the OK response from the user terminal B, and transfers the response to the PoC management server 5 (step S223). The conference A manager 53a of the PoC management server 5 receives the OK response from the SIP/SIMPLE server (step S225). The processing shifts to a processing of Fig. 22 through terminals Q, R and S.

The processing subsequent to the terminals Q, R and S will be explained by using Fig. 22. The user B recognizes the chat calling, and judges whether or not he or she participate in the chat. When he or she decides to participate in the chat, he or she inputs a chat participation response into the user terminal B. The user terminal B accepts the input of the chat participation response by the user B (step S227), and transmits the participation response by the user B to the SIP/SIMPLE server 3 (step S229). The routing processor 35 of the SIP/SIMPLE server 3 receives the participation response by the user B from the user terminal B, and transfers the response to the PoC management server 5 (step S231). The conference A manager 53a of the PoC management server 5 receives the participation response by the user B from the SIP/SIMPLE server 3, and stores the data representing the chat participation in association with the user B in the user data storage 533a (step S233).

In response to this, the conference A manager 53a of the PoC management server 5 transmits the OK response to the SIP/SIMPLE server 3 (step S235). The routing processor 35 of the SIP/SIMPLE server 3 receives the OK response from the PoC management server 5, and transfers the response to the user terminal B (step S237). The chat processor 913 of the user terminal B receives the OK response from the SIP/SIMPLE server 3 (step S239).

Then, the conference A manager 53a of the PoC management server 5 uses the data stored in the user data storage 533a to generate a presence registration request of the chat participants (including the user of the chat calling request source, and here the users A and B), and transmits the request to the SIP/SIMPLE server 3 (step S241). More specifically, it requests to register the user IDs (in the example of Fig. 6, "UserA, UserB") of the participants as the presence data whose presence ID is "ChatUser", and whose owner is the conference A manager 53a. The presence data manager 331a of the conference A presence manager 33a in the SIP/SIMPLE server 3 receives the presence registration request of the chat participants from the PoC management server 5, and stores the user IDs (in the example of Fig. 6, "UserA, UserB") of the chat participants into the presence data storage 333a in association with the presence ID ("ChatUser") relating to the received presence registration request (step S243). As shown in Fig. 6, the user IDs (in the example of Fig. 6, "UserA, UserB") of the participants are registered into the area 3365 of the presence information storage area 3331. In addition, the conference A presence manager 33a transmits the OK response to the PoC management server 5 (step S245). The conference A manager 53a of the PoC management server 5 receives the OK response from the SIP/SIMPLE server 3 (step S247).

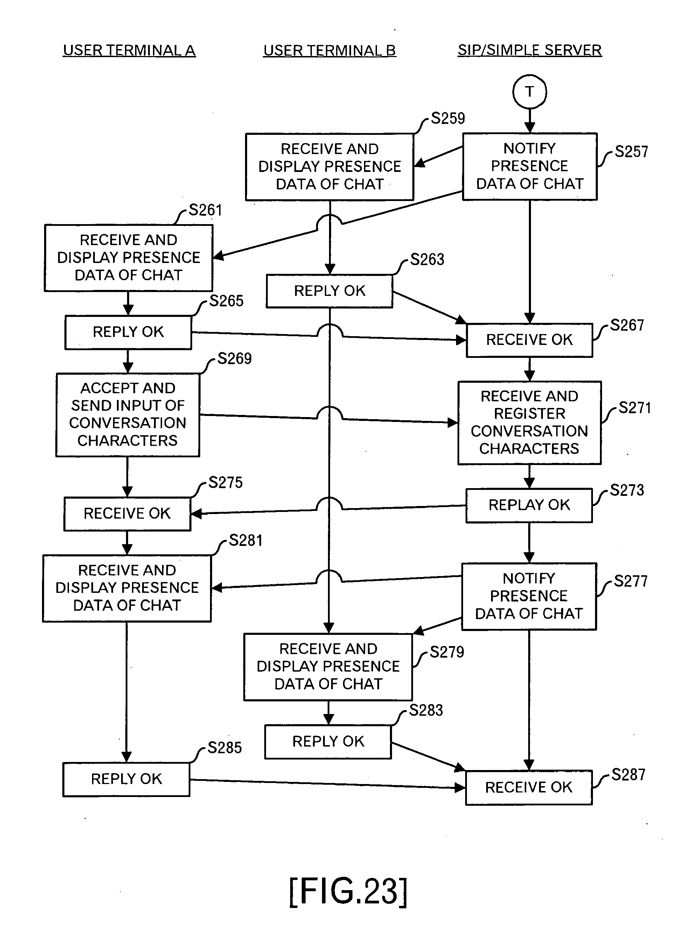

Furthermore, the conference A manager 53a of the PoC management server 5 uses the data stored in the user data storage 533a to generate a publication setting request for the chat participants, and transfers the request to the SIP/SIMPLE server 3 (step S249). More specifically, it requests to register the user IDs (in the example of Fig. 6, "UserA, UserB") of the chat participants into the area 3392 for the subscriber ID in the area 339 for the group III "chat" of the presence group information storage area 3333. The presence data manager 331a of the conference A presence manager 33a in the SIP/SIMPLE server 3 receives the publication setting request for the chat participants from the PoC management server 5, and stores the user IDs of the chat participants relating to the received publication setting request into the area 3392 for the subscriber ID in the area 339 for the group III "chat" of the presence group information storage area 3333 (step S251). In addition, the conference A presence manager 33a transmits the OK response to the PoC management server 5 (step S253). The conference A manager 53a of the PoC management server 5 receives the OK response from the SIP/SIMPLE server 3 (step S255). The processing shifts to a processing of Fig. 23 through a terminal T.

Incidentally, when the processing of the conference A presence manager 33a of the SIP/SIMPLE server in Fig. 22 is completed, the presence data identified in the area 3391 of the presence ID included in the area 339 for the group III "chat" in the presence group information storage area 3333 is notified to the chat participants. That is, the presence data "Chat contents" (in the example of Fig. 6, "Hello...") whose presence ID is "Chat" and the presence data "Chat participants" (in the example of Fig. 6, "UserA, UserB") whose presence ID is "ChatUser" is automatically notified when updated. However, because the owner of the presence data is the conference A manager 53a, normally, the chat participants cannot update the presence data. When the chat participants cannot change the chat contents, the chat cannot be progressed. On the other hand, at the beginning of the chat during the voice-based teleconference, if a processing such as activating the presence managers owned by the chat participants in addition to the conference A presence manager 33a, there is a problem that the resources of the SIP/SIMPLE server 3 and the PoC management server 5 is redundantly wasted. Therefore, in this embodiment, the chat participants registered as the presence data whose presence ID is "ChatUser" can update the presence data whose presence ID is "Chat" regardless of the owner. That is, in response to the presence registration request of the chat participants at the step S241 or the publication setting request for the chat participants at the step S249, the authority to update the chat contents is granted to the chat participants. Thus, without wasting the resources, it becomes possible to smoothly start the chat.

Next, the processing subsequent to the terminal T will be explained by using Fig. 23. Here, the delivery processor 335a of the conference presence manager 33a in the SIP/SIMPLE server 3 notifies the user terminals A and B of the presence data of the chat (the presence data of the chat contents and presence data of the chat participants) according to the setting of the presence data storage 333a (step S257). Initially, because no chat contents are registered, none is notified. The presence data processor 915 of the client application 91 in the user terminal B receives the presence data of the chat from the SIP/SIMPLE server 3, and displays the data on the display device (step S259). In addition, the presence data processor 915 of the client application 91 in the user terminal A receives the presence data of the chat from the SIP/SIMPLE server 3, and displays the data on the display device (step S261). The presence data processor 915 of the user terminal B replies the OK response to the SIP/SIMPLE server 3 (step S263). Similarly, the presence data processor 915 of the user terminal A replies the OK response to the SIP/SIMPLE server 3 (step S265). The conference A presence manager 33a of the SIP/SIMPLE server 3 receives the OK response from the user terminals A and B (step S267).

Furthermore, for example, the user A operates the user terminal A to input the chat contents (dialogue characters), and the presence data processor 915 of the user terminal A accepts the input of the dialogue characters by the user A, and transmits them as the presence data of the presence ID "Chat" to the SIP/SIMPLE server 3 (step S269). The presence data manager 331a in the conference A presence manager 33a of the SIP/SIMPLE server 3 receives the dialogue characters data as the presence data of the presence ID "Chat" from the user terminal A, and stores the data into the presence data storage 333a (step S271). The conference A presence manager 33a transmits the OK response to the user terminal A (step S273). The user terminal A receives the OK response from the SIP/SIMPLE server 3 (step S275).

Thus, because the presence data is updated, the delivery processor 335a of the conference A presence manager 33a in the SIP/SIMPLE server 3 notifies the user terminals A and B of the presence data (the presence data of the chat contents and the presence data of the chat participants when updated) of the chat according to the setting of the presence data storage 333a (step S277). Only the difference may be notified. The presence data processor 915 of the client application 91 in the user terminal B receives the presence data of the chat from the SIP/SIMPLE server 3, and displays the data on the display device (step S279). In addition, the presence data processor 915 of the client application 91 in the user terminal A receives the presence data of the chat from the SIP/SIMPLE server 3, and displays the data on the display device (step S281). The presence data processor 915 of the user terminal B replies the OK response to the SIP/SIMPLE server 3 (step S283). Similarly, the presence data processor 915 of the user terminal A replies the OK response to the SIP/SIMPLE server 3 (step S285). The conference A presence manager 33a of the SIP/SIMPLE server 3 receives the OK response from the user terminals A and B (step S287).

In the following, by repeating the processing of the steps S269 to S287, the dialogue can be progressed in the chat. Incidentally, the dialogue characters can be transmitted from the user terminal B. The processing content is similar. Therefore, further explanation is omitted.

By carrying out such a processing, while maintaining the voice-based teleconference, it becomes possible to separately carry out the character-based chat in the subset of the participants of the voice-based teleconference. Incidentally, because the chat is realized by using the presence technique, the resources prepared for the voice-based teleconference can be efficiently used.

In addition, because plural chat groups can be managed by preparing plural sets of the presence group information and the presence data corresponding to it for one voice conference, for example, as the subset of the voice conference in which four persons A, B, C and D participate, the chats of plural subsets can be carried out such as the users A and B and users C and D respectively carry out the chat, or the users A and B and users A and C respectively carry out the chat.

In addition, the presence data of a specific user is managed in the presence information storage area 3131 in Fig. 5. However, here, for instance, when the presence ID "position" is provided, and the presence data of either "teacher" or "student" is stored, it becomes possible to control so that the user whose presence data is "student" is permitted to call only the user whose presence data is "teacher" as the calling destination of the chat, and the user whose presence data is "teacher" is permitted to call any users. That is, it becomes possible to control the transmission of the presence data by using the presence data managed for each user.

On the other hand, the presence data of the voice-based teleconference is managed in the presence information storage area 3331 of Fig. 6. However, for example, when the subscriber ID of the participant having a position of the teacher is registered for the presence ID "teacher", and further the subscriber IDs of the participants having a position of the student are registered for the presence ID "student", the similar processing can be carried out. That is, it becomes possible to control such as the user registered as the presence data whose presence ID is "teacher" can call all of the conference participants into the chat, and the user registered as the presence data whose presence ID is "student" can call only the user registered as the presence data whose presence ID is "teacher" into the chat. Therefore, it becomes possible to control the transmission of the presence data by using the presence data managed for each conference.

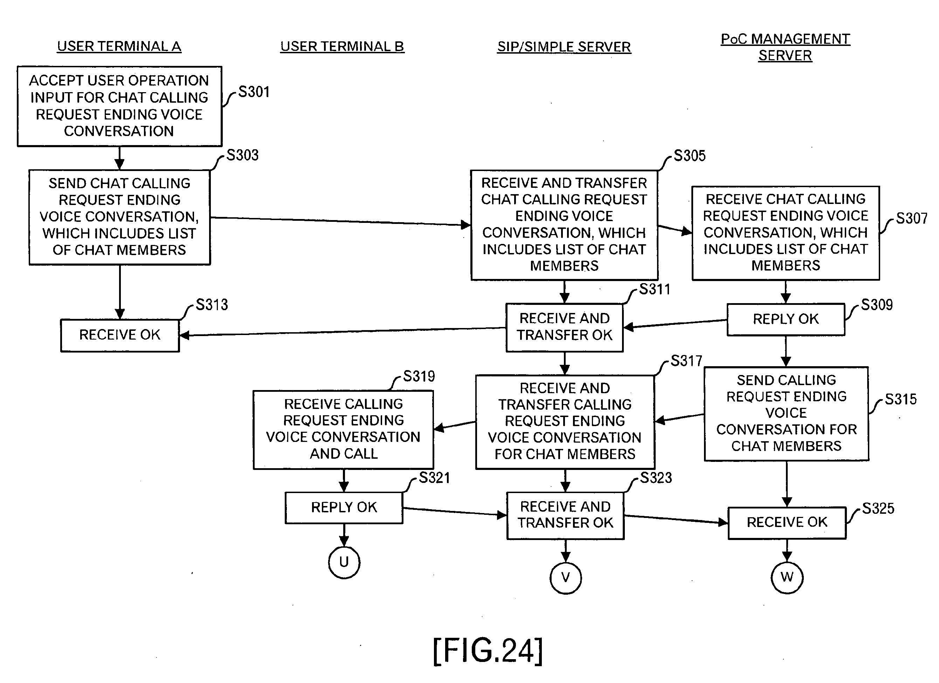

Next, a processing flow when the voice-based teleconference is not maintained will be explained by using Figs. 24 to 26. First, in the voice-based teleconference in which the user A, user B, user C and the like participate, for example, the user A resulted in a state where the utterance by the voice cannot be made because the user A takes a train or the like, and, in principle, the entire users who participate in the voice-based teleconference shifts to the character-based chat. Such a case will be explained.

First, the user A operates the user terminal A to designate that the voice-based teleconference is not maintained, and the users of participants who are called to the chat. Incidentally, when the voice-based teleconference is not maintained, in principle, it is supposed that all of the participants shift to the chat. Therefore, there is a case where the users of the participants who are called to the chat are not designated. The chat processor 913 of the user terminal A accepts such a user operation input for a chat calling request to end a voice conversation (i.e. without maintenance of the voice) (step S301), and transmits the chat calling request to end the voice conversation, which includes a list of the chat members to the SIP/SIMPLE server 3 (step S303). When it is supposed that all participants shift, there is a case where the list of the chat members is not included. The routing processor 35 of the SIP/SIMPLE server 3 receives the chat calling request to end the voice conversation, which includes the list of the chat members, and transfers the request to the PoC management server 5 (step S305).

The conference A manager 53a of the PoC management server 5 receives the calling request to end the voice conversation, which includes the list of the chat members, from the SIP/SIMPLE server 3, and stores the list of the chat members into, for example, the user data storage 533a (step S307). Then, the conference A manager 53a of the PoC management server 5 replies the OK response to the SIP/SIMPLE server 3 (step S309). The routing processor 35 of the SIP/SIMPLE server 3 receives the OK response from the PoC management server 5, and transfers the response to the user terminal A (step S311). The chat processor 913 of the user terminal A receives the OK response from the SIP/SIMPLE server 3 (step S313).

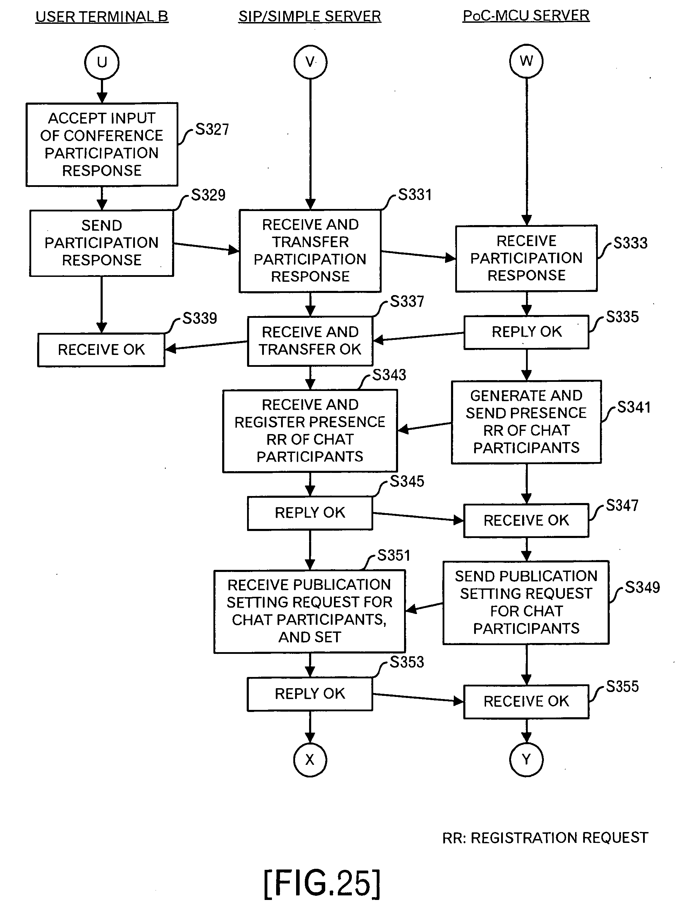

In addition, the conference A manager 53a of the PoC management server 5 transmits a chat calling to end the voice conversation for the chat members (here, the user B) for each chat member to the SIP/SIMPLE server 3 according to the received list of the chat members (step S315). Incidentally, the data for the calling source user is included in the chat calling. The routing processor 35 of the SIP/SIMPLE server 3 receives the chat calling to end the voice conversation for the chat members from the PoC management server 5, and transfers the chat calling to the user terminal B (step S317). The chat processor 913 of the user terminal B receives the chat calling to end the voice conversation from the SIP/SIMPLE server 3, and carries out a chat calling processing such as carrying out a display for the chat calling, outputting a predetermined voice or the like (step S319). Incidentally, the chat processor 913 of the user terminal B transmits the OK response to the SIP/SIMPLE server 3 (step S321). The routing processor 35 of the SIP/SIMPLE server 3 receives the OK response from the user terminal B, and transfers the response to the PoC management server 5 (step S323). The conference A manager 53a of the PoC management server 5 receives the OK response from the SIP/SIMPLE server 3 (step S325). The processing shifts to a processing of Fig. 25 through terminals U, V, and W.

The processing subsequent to the terminals U, V and W will be explained by using Fig. 25. When the user B recognizes the chat calling, he or she judges whether or not he or she participates in the chat. When he or she decides to participate, he or she inputs a chat participation response into the user terminal B. The user terminal B accepts the input of the chat participation response by the user B (step S327), and transmits the participation response by the user B to the SIP/SIMPLE server 3 (step S329). The routing processor 35 of the SIP/SIMPLE server 3 receives the participation response by the user B from the user terminal B, and transfers the response to the PoC management server 5 (step S331). The conference A manager 53a of the PoC management server 5 receives the participation response by the user B from the SIP/SIMPLE server 3, and registers the user B as the chat participant into the user data storage 533a (step S333).

In response to this, the conference A manager 53a of the PoC management server 5 transmits the OK response to the SIP/SIMPLE server 3 (step S335). The routing processor 35 of the SIP/SIMPLE server 3 receives the OK response from the PoC management server 5, and transfers the response to the user terminal B (step S337). The chat processor 913 of the terminal B receives the OK response from the SIP/SIMPLE server 3 (step S339).

In principle, the cat calling is notified to all of the conference participants. However, there is a case where there is a participant who does not respond to the calling of the user A. In such a case, there is a case where the voice-based teleconference coexists with the character-based chat.

Then, the conference A manager 53a of the PoC management server 5 uses the data stored in the user data storage 533a to generate a presence registration request of the chat participants (including the chat calling request source. Here, the users A and B), and transmits the request to the SIP/SIMPLE server 3 (step S341). More specifically, it requests to register the user IDs of the participants as the presence data whose presence ID is "ChatUser" and whose owner is the conference A manager 53a. The presence data manager 331a of the conference A presence manager 33a in the SIP/SIMPLE server 3 receives the presence registration request of the chat participants from the PoC management server 5, and stores the user IDs of the chat participants as the presence data into the presence data storage 333a in association with the presence ID ("ChatUser") relating to the received presence registration request (step S343). As shown in Fig. 6, the user IDs (in the example of Fig. 6, "UserA, UserB") is registered into the area 3365 of the presence information storage area 3331. In addition, the conference A presence manager 33a transmits the OK response to the PoC management server 5 (step S345). The conference A manager 53a of the PoC management server 5 receives the OK response from the SIP/SIMPLE server 3 (step S347).

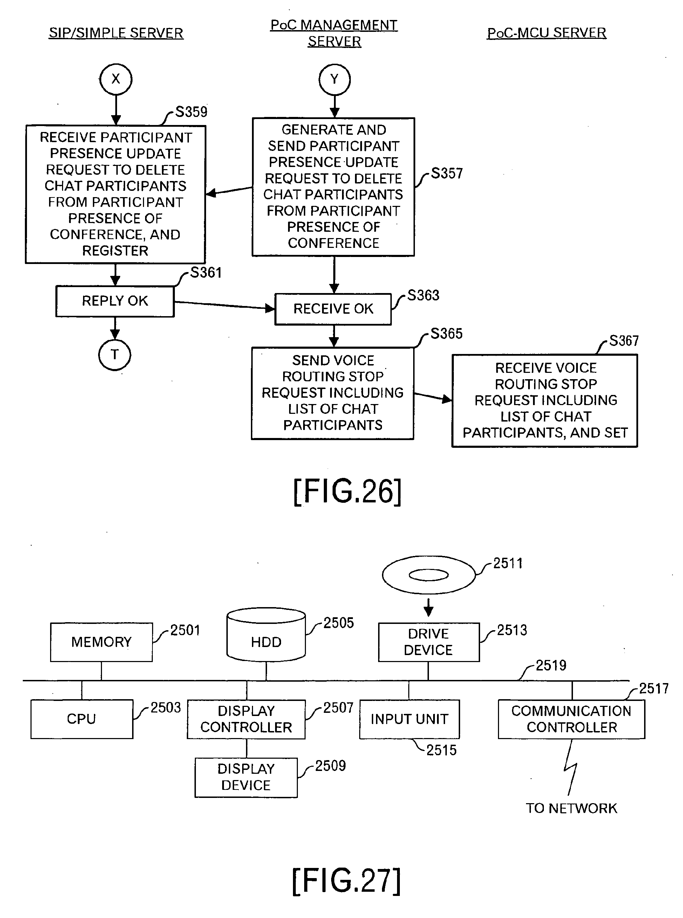

Furthermore, the conference A manager 53a of the PoC management server 5 uses the data stored in the user data storage 533a to generate a publication setting request for the chat participants, and transmits the request to the SIP/SIMPLE server 3 (step S349). More specifically, it requests to register the user ID of the chat participants into the area 3392 of the subscriber IDs in the area 339 for the group III "chat" of the presence group information storage area 3333. The presence data manager 331a of the conference A presence manager 33a in the SIP/SIMPLE server 3 receives the publication setting request for the chat participants from the PoC management server 5, and stores the user IDs (in the example of Fig. 6, "UserA, UserB") of the participants relating to the received publication setting request into the area 3392 of the subscriber IDs in the area 339 for the group III "chat" of the presence group information storage area 3333 (step S351). In addition, the conference A presence manager 33a transmits the OK response to the PoC management server 5 (step S353). The conference A manager 53a of the PoC management server 5 receives the OK response from the SIP/SIMPLE server 3 (step S355). The processing shifts to a processing of Fig. 26 through terminals X and Y.

Thus, when the processing of the conference A presence manager 33a of the SIP/SIMPLE server 3 is completed, the presence data identified in the area 3391 of the presence IDs included in the area 339 of the group III "chat" in the presence group information storage area 3333 is notified to the chat participants. That is, the presence data "chat contents" (in the example of Fig. 6, "Hello....") whose presence ID is "Chat" and the presence data "chat participants" (in Fig. 6, "UserA, UserB") whose presence ID is "ChatUser" are automatically notified when updated. As described in association with Fig. 22, also here, the chat participants registered as the presence data whose presence ID is "ChatUser" are not the owner, but can update the presence data whose presence ID is "Chat". That is, in response to the presence registration request of the chat participants at the step S341 or the publication setting request for the chat participants at the S349, the authority to update the chat contents is granted to the chat participants. Thus, without wasting the resource, it becomes possible to start the chat smoothly.

Next, the processing subsequent to the terminals X and Y will be explained by using Fig. 26. The conference A manager 53a of the PoC management server 5 uses the data stored in the user data storage 533a to generate a participant presence update request to delete the chat participant (here, including the chat calling request source) from the participant presence of the conference, and transmits the request to the SIP/SIMPLE server 3 (step S357). More specifically, it requests to delete the user ID (in the example of Fig. 6, "UserA, UserB") of the chat participants from the presence data whose presence ID is "JoinUser". The conference A presence manager 33a of the SIP/SIMPLE server 3 receives the participant presence update request to delete the chat participants from the participant presence of the conference from the PoC management server 5, and carries out an update registration for the area 3363 for the presence ID "JoinUser" in the presence information storage area 3331 in the presence data storage 333a not so as to include the user IDs of the chat participants (step S359). In addition, the conference A presence manager 33a transmits the OK response to the PoC management server 5 (step S361). The conference A manager 53a of the PoC management server 5 receives the OK response from the SIP/SIMPLE server 3 (step S363).

By using such a processing, it is registered that the chat participants leave from the voice-based teleconference, in a form of the update registration, into the SIP/SIMPLE server 3, and it is notified as the update of the presence data to other participants of the conference or conference members (i.e. the users who were called to the conference). Incidentally, in addition to the aforementioned processing, the publication setting of the presence data of the holder of the right to speak, the presence data of the participants, and the presence data of the conference members for the participants or conference members may be released. In addition, at the step S357, only the chat participants are deleted from the participant presence of the voice-based teleconference. However, all of the participants are caused to leave from the voice-based teleconference.

In addition, the conference A manager 53a of the PoC management server 5 uses the data stored in the user data storage 533a to transmit a voice routing stop request including the list of the chat participants to the PoC-MCU server 7 (step S365). The conference A voice communication manager 71a of the PoC-MCU server 7 receives the voice routing stop request including the list of the participants from the PoC management server 5, and carries out a setting (e.g. set off to a routing flag) for the voice routing stop for the users included in the list of the chat participants in the speaker and the participants data storage 711a (step S367).

Because the chat participants are deleted from the participants of the voice-based teleconference at the step S357 by the conference A manager 53a of the PoC management server 5, the utterance by the voice does not occurs, and there is no need to stop the voice routing. However, because the resource in the PoC-MCU server 7 is efficiently used, the stop is carried out.

The processing after Fig. 26 shifts to the processing of Fig. 23 through the terminal T. Therefore, after this, the conference progresses by the chat using the presence technique.

Incidentally, when the presence data representing the dialogue contents of the chat is stored in a predetermined storage device, they are used as logs of the dialogue contents exchanged in the chat. Therefore, by transmitting the logs of the dialogue contents of the chat, which is the stored presence data, to the terminal of a user who intermediately participated in the chat in response to the a reference request from the user, it is possible for the user who intermediately participated in the chat to know the dialogue contents exchanged before the own participation.

Although one embodiment of this invention was described above, this invention is not limited to this. The functional block diagrams shown in Figs. 1 to 4 are mere examples, and there is a case where they are not always identical with the actual program module configurations. Furthermore, as for the method of holding the data, which is shown in Figs. 5 to 11, it is possible to adopt other methods as far as the similar data can be managed.

Incidentally, the SIP/SIMPLE server 3, the PoC management server 5 and the PoC-MCU server 7 are computer devices. That is, a memory 2501 (storage device), a CPU 2503 (processor), a hard disk drive (HDD) 2505, a display controller 2507 connected to a display device 2509, a drive device 2513 for a removal disk 2511, an input device 2515, and a communication controller 2517 for connection with a network are connected through a bus 2519 as shown in Fig. 28. An operating system (OS) and an application program for carrying out the foregoing processing in the embodiment, are stored in the HDD 2505, and when executed by the CPU 2503, they are read out from the HDD 2505 to the memory 2501. As the need arises, the CPU 2503 controls the display controller 2507, the communication controller 2517, and the drive device 2513, and causes them to perform necessary operations. Besides, intermediate processing data is stored in the memory 2501, and if necessary, it is stored in the HDD 2505. In this embodiment of this invention, the application program to realize the aforementioned functions is stored in the removal disk 2511 and distributed, and then it is installed into the HDD 2505 from the drive device 2513. It may be installed into the HDD 2505 via the network such as the Internet and the communication controller 2517. In the computer as stated above, the hardware such as the CPU 2503 and the memory 2501, the OS and the necessary application program are systematically cooperated with each other, so that various functions as described below in details are realized.

In addition, the user terminal is also represented by a similar configuration by providing the storage device such as a flash memory instead of the HDD 2505 and the drive device 2513.

In addition, as for the step S115 of Fig. 18, a configuration was explained in which the presence registration request of the participants is transmitted for each participant from the PoC management server 5 to the SIP/SIMPLE server 3. However, it is possible to adopt a configuration in which without immediately transmitting the presence registration request of the pertinent participants during a first predetermined time by the conference A manager 53a of the PoC management server 5 even when receiving the participation response, the participation responses received during the predetermined time are grouped to transmit the presence registration request of the pertinent participants. During the first predetermined time, the possibility that plural participants reply the participation response is high. Therefore, a lot of presence registration requests of the participants are transmitted, and the update of the presence data is frequently carried out. In addition, when the update of the presence data is frequently notified to the user terminal, the communication bandwidth in the wireless section is wasted. Then, by grouping the participation requests during the predetermined time as described above, the communication volume between the presence data 3 and the user terminals is reduced and the response becomes earlier. Incidentally, after the predetermined time elapsed, for each receipt of the participation response, the step S115 and subsequent steps are executed.

In addition, the step S241 of Fig. 22 and the step S341 of Fig. 25 are also similar.

Furthermore, the processing was explained in which the PoC management server 5 carries out the proxy subscription request on behalf of the user. However, if it is obvious, the conference management server 5 or the SIP/SIMPLE server 3 may automatically change the subscription relations also in other cases.

Furthermore, only the shift from the voice-based teleconference to the chat was explained. However, it becomes possible to carry out a return from the chat to the voice-based teleconference by the similar method to the shift to the chat. However, at the step S357, the registration of the participants, not the deletion, is requested, and the resumption of the routing, not the routing stop, is requested.

## Claims

1. A communication control method executed by a computer, comprising:
when a call-in request to a chat for another participant in a voice-based teleconference by a first participant of said voice-based teleconference is received, a step of transmitting said call-in request to said chat to a terminal of said another participant; and
when a participation response to said chat by said another participant is received, a step of carrying out a presence management setting so as to enable said first participant and a participant replying said participation response to update and subscribe dialogue contents of said chat, which are managed as presence data delivered to subscribers when updated.

2. The communication control method as set forth in claim 1, further comprising:
when said participation response to said chat by said another participant is received, a step of carrying out a presence management setting so as to enable said first participant and said participant replying said participation response to at least subscribe a participant list of said chat, which is managed as said presence data.

3. The communication control method as set forth in claim 1, further comprising:
in response to an update instruction of said presence data, a step of transmitting said presence data to a terminal of a chat participant according to said presence management setting.

4. The communication control method as set forth in claim 1, **characterized in that** said presence data is managed as presence data for said voice-based teleconference.

5. The communication control method as set forth in claim 1, further comprising:
when said call-in request to said chat by said first participant of said voice-based teleconference includes data representing an end of said voice-based teleconference, a step of deleting at least said first participant and said participant replying said participation response from a participant list of said voice-based teleconference.

6. The communication control method as set forth in claim 5, further comprising:
a step of transmitting a request for stopping a routing of voice data for said participants deleted from said participant list of said voice-based teleconference to a computer carrying out a voice communication processing for said participants of said voice-based teleconference.

7. The communication control method as set forth in claim 1, **characterized in that** said another participant is a subset of said participants of said voice-based teleconference, wherein said subset is designated by said first participant of said voice-based teleconference.

8. The communication control method as set forth in claim 1, **characterized in that** a plurality of sets of said presence data including said dialogue contents of said chat and a participant list of said chat is managed for one voice-based teleconference.

9. The communication control method as set forth in claim 1, further comprising:
when said dialogue contents of said chat managed by said presence data is stored in a predetermined storage, and a reference request is received from said participant, a step of reading out the stored dialogue contents from said predetermined storage, and transmitting said dialogue contents to a terminal of said participant.

10. The communication control method as set forth in claim 1, further comprising:
when said call-in request to said chat for said another participant by said first participant of said voice-based teleconference is received, a step of judging, based on information concerning a state of said first participant, whether or not a participation request to said chat is transmitted to a terminal of said another participant.

11. A communication control method executed by a conference management computer, comprising:
when a call-in request to a chat for another participant in a voice-based teleconference by a first participant of said voice-based teleconference is received through a presence server managing presence data, a step of requesting said presence server to transmit a participation request to said chat to a terminal of said another participant; and
when a participation response to said chat by said another participant is received through said presence server, a step of causing said presence server to carry out a presence management setting so as to enabling said first participant and a participant replaying said participation response to update and subscribe dialogue contents of said chat managed as presence data delivered to a subscriber when updated.

12. The communication control method as set forth in claim 11, further comprising:
when said participation response to said chat by said another participant is received through said presence server, a step of causing said presence server to carry out a presence management setting so as to enabling said first participant and said participant replying said participation response to at least subscribe a participant list of said chat managed as said presence data.

13. The communication control method as set forth in claim 11, further comprising:
when said call-in request to said chat by said first participant in said voice-based teleconference includes data representing an end of said voice-based teleconference, a step of causing said presence server to delete at least said first participant and said participant replying said participation response from a participant list of said voice-based teleconference managed as said presence data.

14. The communication control method as set forth in claim 13, further comprising:
a step of transmitting a request for stopping a routing of voice data to said participants deleted from said participant list of said voice-based teleconference, to a computer carrying out a voice communication processing for said participants of said voice-based teleconference.

15. A computer system, comprising:
a presence server having routing means for carrying out transfer of a message to control a conference, and presence management means for carrying out a processing associated with presence data; and
a conference management server that carries out a conference control processing, and
**characterized in that**, when a call-in request to a chat for another participant of a voice-based teleconference is received from a terminal of a first participant of said voice-based teleconference, said routing means of said presence server transfers said call-in request to said conference management server,
when said call-in request to said chat is received, said conference management server transmits a participation request to said chat for said another participant to said presence server,
when a participation request to said chat for said another participant is received from said conference management server, said routing means of said presence server transmits said participation request to said chat to a terminal of said another participant,
when a participation response to said chat is received from said terminal of said another participant, said routing means of said presence server transfers said participant response to said conference management server,
when said participation response to said chat by said another participant is received, said conference management server transmits a presence setting request so as to enable said first participant and a participant replying said participation response to update and subscribe dialogue contents of said chat, and
in response to said presence setting request, said presence management means of said presence server carries out a setting so as to enable said first participant and said participant replying said participation response to update and subscribe said dialogue contents of said chat as presence data delivered to subscribers when updated.

16. The computer system as set forth in claim 15, **characterized in that**, when said participation response to said chat by said another participant is received, said conference management server transmits a second presence setting request so as to enable said first participant and said participant replying said participation response to at least subscribe a participant list of said chat to said presence server, and
said presence management means of said presence server carries out a setting so as to enable said first participant and said participant replying said participation response to at least subscribe said participant list of said chat as said presence data in response to said second presence setting request.

17. The computer system as set forth in claim 15, **characterized in that**, when said call-in request to said chat by said first participant of said voice-based teleconference includes data representing an end of said voice-based teleconference, said conference management server transmits a third presence setting request so as to delete at least said first participant and said participant replying said participation response from a participant list of said voice-based teleconference, to said presence server, and
said presence management means of said presence server updates said participant list of said voice-based teleconference managed as said presence data in response to said third presence setting request.

18. The computer system as set forth in claim 17, **characterized in that** said conference management server transmits a request for stopping a routing of voice data for said participants deleted from said participant list of said voice-based teleconference to a computer carrying out a voice communication processing for said participants of said voice-based teleconference.

19. A presence server, comprising:
routing means for carrying out transfer of a message to control a conference; and
presence management means for carrying out a processing associated with presence data, and
**characterized in that**
when a call-in request to a chat for another participant of a voice-based teleconference is received from a terminal of a first participant of said voice-based teleconference, said routing means transfers said call-in request to a conference management server,
when a participation request to said chat for said another participant is received from said conference management server, said routing means transmits said participation request to said chat to a terminal of said another participant, and
when a participation response to said chat is received from said terminal of said another participant, said routing means transfers said participant response to said conference management server,
when a presence setting request so as to enable said first participant and a participant replying said participation response to update and subscribe dialogue contents of said chat is received from said conference management server, said presence management means carries out a setting so as to enable said first participant and said participant replying said participation response to update and subscribe said dialogue contents of said chat as presence data delivered to subscribers when updated, in response to said presence setting request.

20. A program for causing a presence server to execute, said program comprising:
when a call-in request to a chat for another participant in a voice-based teleconference by a first participant of said voice-based teleconference is received, a step of transmitting said call-in request to said chat to a terminal of said another participant; and
when a participation response to said chat by said another participant is received, a step of carrying out a presence management setting so as to enable said first participant and a participant replying said participation response to update and subscribe dialogue contents of said chat, which are managed as presence data delivered to subscribers when updated.

21. A program for causing a conference management computer to execute, said program comprising:
when a call-in request to a chat for another participant in a voice-based teleconference by a first participant of said voice-based teleconference is received through a presence server managing presence data, a step of requesting said presence server to transmit a participation request to said chat to a terminal of said another participant; and
when a participation response to said chat by said another participant is received through said presence server, a step of causing said presence server to carry out a presence management setting so as to enabling said first participant and a participant replaying said participation response to update and subscribe dialogue contents of said chat managed as presence data delivered to a subscriber when updated.

22. A communication control method executed by a computer, comprising:
when a call-in request to a chat for another participant of a voice-based teleconference by a first participant of said voice-based teleconference is received, a step of transmitting a participation request to said chat to a terminal of said another participant; and
when a participation response to said chat by said another participant is received, a step of carrying out a management setting of information concerning delivery destinations so as to enable said first participant and said participant replying said participation response to update and subscribe dialogue contents of said chat managed as data delivered to subscribers when updated.
